# EUROPÄISCHE PATENTSCHRIFT

(11) **EP 3 468 906 B1**
(45) Veröffentlichungstag und Bekanntmachung des Hinweises auf die Patenterteilung: **11.12.2019**
(21) Anmeldenummer: 18722032.2
(22) Anmeldetag: 03.05.2018
(51) Int. Cl.: B66C 13/12, B66C 19/00, H02G 11/00, H02G 11/02, H01R 13/58, H02G 15/007, H01R 13/595

(54) **LEITUNGSKABEL UND ENERGIEVERSORGUNGSSYSTEM**
ENERGY CABLE AND POWER SUPPLY SYSTEM
CÂBLE D'ALIMENTATION ET SYSTÈME D'ALIMENTATION EN ÉNERGIE

(30) Priorität: 09.05.2017 DE 102017109985
(43) Veröffentlichungstag der Anmeldung: 17.04.2019
(73) Patentinhaber: Conductix-Wampfler GmbH, 79576 Weil am Rhein (DE)
(72) Erfinder: LANG, Dietmar, 79418 Schliengen (DE); NÖLTNER, Martin, 79541 Lörrach-Haagen (DE); MAIER, Bernd, 79418 Schliengen (DE); KREITER, Frank, 79429 Malsburg/Marzell (DE)
(74) Vertreter: Charrier Rapp & Liebau
(86) Internationale Anmeldenummer: PCT/EP2018/061360
(87) Internationale Veröffentlichungsnummer: WO 2018/206394

(56) Entgegenhaltungen:
- WO-A1-2011/006154
- WO-A1-2014/131826
- CN-U- 204 882 956
- DE-U1-202015 004 918
- JP-A- H05 203 815
- US-A1- 2010 055 970

## Beschreibung

Die Erfindung betrifft ein Leitungskabel nach dem Oberbegriff des Anspruchs 1 sowie ein Energieversorgungssystem nach dem Oberbegriff des Anspruchs 13.

Aus der DE 20 2006 009 750 U1 ist ein Container-Ladekran bekannt, an dem eine Leitungskabeltrommel zum Auf- und Abwickeln eines Leitungskabels vorgesehen ist. Dabei ist das Leitungskabel mit einer ortsfesten Speisestelle verbunden, gegenüber der der Ladekran in eine Längsrichtung verfährt. Je nach Verfahrposition wird dabei das Leitungskabel von der Leitungskabeltrommel auf- oder abgerollt. Dies weist den Nachteil auf, dass der Leitungskran fest an eine Trasse gebunden ist, entlang deren er in Längsrichtung vor- und zurückfährt. Deshalb waren lange Zeit die Krane auf Schienen montiert und fest mit einer Einspeisestelle verbunden.

Da Krane vermehrt nicht nur längs eines einzigen Containerstapelplatzes verfahren sollen, sondern auch zwischen seitlich und in Längsrichtung zueinander versetzten unterschiedlichen Stapelplätzen, können sie nicht mehr fest mit einer einzigen, dem jeweiligen Containerstapelplatz zugeordneten Einspeisestelle verbunden werden. Vielmehr müssen sie flexibel mit unterschiedlichen Einspeisestellen verbindbar sein.

Um dies zu ermöglichen, sieht die WO 2014/131826 A1 eine Vorrichtung zum automatischen Verbinden eines Krans mit einer elektrischen Leistungsversorgung vor, wobei die am Kran mitgeführte Verbindungsleitung endseitig mit einem Stecker versehen ist, welcher in eine in einem Erdloch versenkte Dockingstation eingesteckt wird. Dabei weist die Dockingstation zwei voneinander beabstandete senkrechte Stangen auf, welche beim Einführen des Steckers in die Dockingstation in Führungsöffnungen des Steckers eindringen. Weiter ist dort eine automatische Verriegelung in dem Erdloch vorgesehen, um den Stecker an der Dockingstation zu fixieren.

Das Leitungskabel steht von der Dockingstation senkrecht nach oben ab und legt sich dann, wenn der Kran sich weiter von der Dockingstation entfernt, auf dem Boden in Längsrichtung neben dem Kran ab. Dabei soll das Leitungskabel möglichst gleichmäßig gebogen und ein minimaler Biegeradius des Leitungskabels nicht unterschritten werden. Weiter ist eine Zugentlastung vorgesehen, um beim Ziehen bzw. Aufrollen des Leitungskabels die darin geführten elektrischen Leitungen nicht zu beschädigen. Deshalb wird bei der bekannten Vorrichtung zusätzlich eine Leitungskabeltraganordnung mitgeführt, um welche das vom Stecker im Boden kommende Leitungskabel gelegt wird. Die Leitungskabeltraganordnung wird zusammen mit dem Stecker an der Dockingstation abgesetzt. Dies weist den Nachteil auf, dass entweder eine Bedienperson das Leitungskabel um die Leitungskabeltraganordnung legen muss, oder das Leitungskabel bereits vorher darauf aufgerollt sein muss. Zudem ist die Leitungskabeltraganordnung aufwendig und baut groß und schwer, so dass die Vorrichtung zum Absetzen und Aufnehmen des Steckers und der Leitungskabeltraganordnung ausreichend robust und antriebsstark ausgelegt werden muss. Auch ist die gesamte am Kran mitzuführende Anordnung schwer und erhöht somit das Gewicht des Krans, so dass dessen Fahrantrieb stärker ausgelegt werden muss. Zudem baut diese Anordnung groß, so dass sie viel Bauraum am Kran benötigt und die Breite des Krans vergrößert.

Die US 2010/0055970 A1 betrifft einen in Verbinderstecker für ein Mehrleiterkabel mit einer axial belastungsübertragenden, nichtleitenden Zugstrang, wobei der Verbinderstecker ein Gehäuse enthält, das eine Anzahl von Kontaktelementen trägt, die an Leitern des Kabels angebracht sind, um in entsprechende Kontaktelemente einzugreifen, die mit einer passenden Buchse verbunden sind. Dabei ist der Zugstrang über ein ringförmiges Element am Ende des Kabels relativ zum Gehäuse verankert. Ein Querstift ist fest an dem Zugstrang des Kabels angebracht und formschlüssig mit dem ringförmigen Element in Eingriff. Das ringförmige Element weist einen Randabschnitt mit einem größeren Außendurchmesser als eine äußere Querschnittsabmessung des Kabels auf, um mit einer Innenschulter mit dem Gehäuse in Eingriff zu gelangen und eine Übertragung von axialer Belastung von dem Zugstrang zu dem Gehäuse und weiter über den Querstift und das Ringelement an eine angepasste Buchse abzuleiten.

Die WO 2011/006154 A1 betrifft einen hochfesten elektrischer Verbinder, der eine äußere zylindrische, steife Trägerabdeckung umfasst, die an beiden Enden und vorzugsweise offen ist. Eine erste elektrische Leitung erstreckt sich durch eine Spannbuchse, die an einem Ende der Trägerabdeckung befestigt ist. Eine passende Buchsenanordnung, durch die eine zweite elektrische Leitung hindurchgeht, ist sicher an einem zweiten gegenüberliegenden Ende der Trägerabdeckung befestigt. Die elektrische Verbindung zwischen den Enden der ersten und zweiten elektrischen Leitungen wird innerhalb der Trägerabdeckung hergestellt. Dieses sichere Verbinden der beiden Leitungen innerhalb der Trägerabdeckung leitet Axial- und Querkräfte, die auf die erste elektrische Leitung ausgeübt werden, unter Umgehung der elektrischen Verbindung auf die Trägerabdeckung ab.

Die US 1,964,350 B betrifft elektrischen Leitungskupplungen, welche in Befestigungs- oder Kupplungselementen eingeführte Drähte unabhängig von Schraubverbindungen sicher halten. Hierdurch wird ein Zug auf die Drähte ohne Beanspruchung der Schraubverbindungen auf die Befestigungselemente übertragen.

DE 20 2007 014 219 U1 betrifft eine elektrische Leitung zur Stromversorgung elektrischer Geräte, mit einem von einem Mantel umgebenen Leitungselement zur Leitung elektrischen Stroms, und mindestens einem von dem Mantel umgebenen, nicht zur Leitung elektrischen Stroms vorgesehenen Zugentlastungselement, das zur Zugentlastung des Leitungselementes an einer Haltestruktur festzulegen ist. Eine Möglichkeit, das Zugentlastungselement nachzuspannen, ist hier nicht offenbart.

Die WO 2003/047060 A1 betrifft eine Vorrichtung zum Ab- und Aufwickeln von in einem Fahrzeug eingebauten Energieleitern mit einem Ende des ausziehbaren Leiters, das während Zwischenhalten mit stationären Punkten von Energieversorgungsnetzen verbindbar ist.

Die DE 2 308 316 A betrifft einen elektrischen Steckverbinder der runden Bauart, bestehend aus dem in eine Steckfassung einsetzbaren und darin mittels Bajonettverschluß lösbar verriegelten Stecker, dessen Verbinderhälften jeweils eine Metallhülse mit darin befestigten Isolierkörpern aufweisen, in denen die zur mechanischen und elektrischen Verbindungsherstellung dienenden Kontaktelemente angeordnet sind.

Die DE 28 16 081 A1 betrifft eine elektrische Steckverbindung, die mit elastischen Druckkontakten versehen ist, und löst die Aufgabe, eine elektrische Verbindung zu schaffen, die aus einem Stecker mit vorzugsweise festen Kontaktstiften sowie einer Dose mit elastisch bewegbaren Druckkontakten und einer Sicherheitsscheibe besteht, die wenigstens teilweise in ihrer Ruhelage und in ihrer Kontaktlage durch die elastische Wirkung der bewegbaren Kontakte des Steckers verriegelbar oder festlegbar ist. Hierzu wird die Verriegelung wenigstens teilweise durch vorspringende isolierende Elemente bewirkt, die mit den beweglichen Kontakten verbunden bzw. diesen zugeordnet sind und unter der Einwirkung elastischer Mittel der letzteren stehen und in der Ruhelage und in der Kontaktlage in den unterschiedlichen Sitzbereichen, die in der Scheibe angebracht sind, eingreifen; wobei die Sitzbereiche, die die Kontaktposition bestimmen, im wesentlichen koaxial zu den Durchbrechungen der Scheibe angeordnet sind, und die jeweiligen Oberflächen und Formen der vorkragenden Elemente, und der Sitzbereiche so gewählt sind, dass sie in geeigneter Weise zusammenwirken und durch einfache Drehbewegung der Scheibe jeweils am Anfang bzw. am Ende der Betätigung ein Rückstellen dieser Elemente bzw. eingreifen derselben in den Sitzbereichen ermöglichen.

Die US 2008/0057770 A1 betrifft einen Push-Pull-Stecker mit einem Außengehäuse, das entlang eines Steckergehäuses nach vorne und hinten bewegt werden kann. Wenn sich das Außengehäuse in seiner vorderen Position befindet, befindet sich ein Verriegelungsarm in einer nach oben gerichteten oder verbundenen Position, und der Stecker bleibt mit einer Buchse verbunden, wenn der Stecker in die Buchse eingeführt wird. Wenn das Außengehäuse nach hinten bewegt wird, drücken Rückhalteausnehmungen an dem Außengehäuse die Nockenfolger an dem Verriegelungsarm nach unten, wodurch der Verriegelungsarm und die Verriegelung in eine untere oder nicht zusammengefügte Position bewegt werden. Der Stecker kann dann von einer Buchse entfernt werden, wenn das Außengehäuse gezogen wird.

Die JP-H05-203815 A offenbart einen Stecker für eine beschichtete optische Faser, wobei Nuten für beschichtete optische Fasern und Nuten für Zugelemente der Länge nach in der äußeren Peripherie eines zentralen Einsatzes abwechselnd und spiralförmig in gleichen Abständen ausgebildet sind. Um zu verhindern, dass die beschichtete optische Faser verbogen wird, wird ein Rohr an dem zentralen Einsatz fixiert und die beschichtete optische Faser an der äußeren Oberfläche des Rohrs angeklebt. Dabei wird das Rohr plastisch entlang der Nuten des zentralen Einsatzes verformt, um das Rohr an dem zentralen Einsatz zu befestigen. Dann werden die beschichteten optischen Fasern an der Außenfläche des Rohrs an den Teilen befestigt, die sich entlang der Nuten unter Verwendung von Klebstoff verformen. Somit ist das Rohr sehr nahe dem Längsendteil eines Mantels vorgesehen, so dass selbst wenn das optische Faserkabel nach der Montage auf einen optischen Verbinder gezogen wird, die beschichteten optischen Fasern sich nicht von den mit dem Mantel bedeckten Teilen zu unbedeckten Teilen bewegen.

Aufgabe der vorliegenden Erfindung ist es deshalb, die oben genannten Nachteile zu beseitigen und das automatische Verbinden eines Leitungskabels mit einer am Boden angeordneten Einspeiseeinrichtung zu vereinfachen, insbesondere auch eine die Energie- und/oder Datenleiter des Leitungskabels schonende, zugentlastende Ausgestaltung bereitgestellt werden. Bevorzugt soll auch eine schonende Führung und Ablage des Leitungskabels ermöglicht werden, insbesondere die Gefahr eines Abknickens oder einer zu starken Abkrümmung des Leitungskabels beim Verfahren des elektrischen Verbrauchers zu verringern.

Die Erfindung betrifft ein Leitungskabel nach dem Oberbegriff des Anspruchs 1 sowie ein Energieversorgungssystem nach dem Oberbegriff des Anspruchs 13.

Die Erfindung löst diese Aufgabe durch ein Leitungskabel mit den Merkmalen des Anspruchs 1 sowie ein Energieversorgungssystem mit den Merkmalen des Anspruchs 13. Vorteilhafte Weiterbildungen und Ausgestaltungen der Erfindung sind in den Unteransprüchen angegeben.

Ein eingangs genanntes Leitungskabel ist erfindungsgemäß dadurch gekennzeichnet, dass das Tragorgan an einem Spannbolzen befestigt ist, der zum Spannen des Tragorgans bevorzugt um eine quer zur Längsrichtung des Tragorgans verlaufende Drehachse drehbar am Verbindungselement befestigt ist.

Dabei kann das Tragorgan als Zugentlastung ausgebildet sein, um Zugkräfte, insbesondere während des Verfahrens eines elektrischen, mit dem Zugkabel verbundenen Verbrauchers, auf die Leiter möglichst gering zu halten. Weiter kann das Tragorgan flexibel sein, und insbesondere ein Aramidseil oder Drahtseil aufweisen. Bevorzugt kann das Leitungskabel einen die Leiter und das Tragorgan umgebenden Außenmantel aufweisen, wobei der in dem Außenmantel vorteilhaft eine weitere Zugentlastung vorgesehen sein kann, insbesondere ein in den Außenmantel eingebettetes Geflecht oder Gewebe. Vorteilhaft können die Leiter mindestens einen Phasenleiter für die elektrische Energieübertragung, mindestens einen Schutzleiter und/oder einen oder mehrere elektrische und/oder optische Datenübertragungsleiter umfassen. Weiter kann der Bereich zwischen den Leitern und dem Tragorgan ein Füllmaterial, insbesondere eine elastisches Füllmaterial enthalten. Zudem kann das Leitungskabel Formteile enthalten, welche die Leiter und das Tragorgan in vorgegebenen Stellungen zueinander halten.

In einer vorteilhaften Ausgestaltung kann das Verbindungselement einen Stützrahmen aufweisen, der kraft- und/oder formschlüssig mit dem Tragorgan verbindbar ist. Weiter kann der Stützrahmen bevorzugt kraft- und/oder formschlüssig und lösbar mit dem Anschluss verbindbar sein, um den Zug weitgehend von den Leitern im Leitungskabel fernzuhalten.

In einer günstigen Fortbildung kann das Verbindungselement eine Rutschsicherung zur Sicherung des Spannbolzens aufweisen, und insbesondere kann der Spannbolzen zum Spannen des Tragorgans in seiner Achsrichtung gegen ein Rückstellelement, insbesondere ein Federelement wie eine Tellerfeder oder eine Spiralfeder aus der Rutschsicherung herausbewegbar sein.

In einer betrieblich günstigen Ausführung kann das Verbindungselement Verriegelungselemente, insbesondere Verriegelungsöffnungen, zur lösbaren form- und/oder kraftschlüssigen Verbindung mit am Anschluss angeordneten, entsprechenden Verriegelungsgegenelementen aufweisen.

In einer weiteren günstigen Ausgestaltung können die Leiter des Leitungskabels zugentlastet oder zugfrei mit im Verbindungselement angeordneten Anschlusselementen verbunden sein. Weiter können die Anschlusselemente in mindestens eine Richtung schwimmend im Verbindungselement gelagert sein. Fertigungstechnisch und einsatztechnisch günstig können mehrere der Anschlusselemente an einem gemeinsamen Anschlussträger angeordnet sein.

Vorteilhaft kann das Verbindungselement eine Verbindungssteckeröffnung zur Aufnahme des Anschlusses aufweisen, wobei am Verbindungselement bevorzugt eine selbsttätig schließende Schutzklappe zum Verschließen der Verbindungssteckeröffnung vorgesehen ist. Weiter können am Verbindungselement Zentrierelemente, insbesondere Zentrierbolzen, zum Zusammenwirken mit entsprechenden Zentriergegenelementen, insbesondere Zentrieröffnungen, des Anschlusses vorgesehen sein.

Vorteilhaft kann am Verbindungselement ein Greifbereich für eine Greifvorrichtung einer Verbindungsvorrichtung vorgesehen sein, um das Verbindungselement gut greifen zu können. Bevorzugt kann der Greifbereich mindestens einen Zentriertrichter für mindestens ein Zentriermittel der Greifvorrichtung oder umgekehrt aufweisen, um das Verbindungselement einfach in einer vorgegebenen, gewünschten Stellung gegenüber dem Anschluss in der Greifvorrichtung halten zu können. In einer vorteilhaften Weiterbildung kann der Zentriertrichter an seinem engeren Ende schlitzförmig in einen Zentrierschlitz verlängert sein.

Ein eingangs genanntes Energieversorgungssystem ist erfindungsgemäß dadurch gekennzeichnet, dass eine oben und nachfolgend beschriebene erfindungsgemäße Verbindungsvorrichtung vorgesehen ist. Bevorzugt kann das Reservoir dabei eine motorisch antreibbare Kabeltrommel sein, wobei das Leitungskabel vorteilhaft nur aufeinander, nicht aber seitlich nebeneinander aufgewickelt wird. Bevorzugt kann das Leitungskabel von oben nach unten ausgegeben werden. Weiter kann vorteilhaft eine Steckerverriegelung zum Verriegeln des Verbindungselements am Anschluss vorgesehen sein. Weiter kann eine Verbindungsvorrichtung zur Verbindung eines Verbindungselements des Leitungskabels mit einem Anschluss der Einspeiseeinrichtung vorgesehen sein. Auch kann vorteilhaft eine Ablagerichtung des Leitungskabels von der Einspeiseeinrichtung zu einem Austritt des Leitungskabels aus einer am Verbraucher angeordneten Kabelführungsvorrichtung verlaufen, wobei vorteilhaft die Fahrrichtung und die Ablagerichtung nur gering voneinander abweichen, insbesondere nicht mehr als 15°.

Die Erfindung wird nachfolgend anhand von detaillierten Ausführungsbeispielen mit Bezug auf die begleitenden Zeichnungen beschrieben. Diese zeigen:
- **Fig. 1**: eine schematische Seitenansicht auf ein Energieversorgungssystem für einen Containerkran;
- **Fig. 2**: eine schematische dreidimensionale Ansicht auf einen Ausschnitt aus Fig. 1 mit einer ersten erfindungsgemäßen Verbindungsvorrichtung;
- **Fig. 3**: eine schematische dreidimensionale Ansicht auf einen Manipulatorarm der Verbindungsvorrichtung aus Fig. 2 beim Greifen eines Verbindungssteckers;
- **Fig. 4**: der Manipulatorarm aus Fig. 3 beim Verbinden des Verbindungssteckers mit einem Steckanschluss einer Einspeiseeinrichtung;
- **Fig. 5**: den Manipulatorarm aus Fig. 3 in einer zurückgezogenen Stellung nach dem Loslassen des Verbindungssteckers;
- **Fig. 6**: die Ansicht aus Fig. 5 mit dem durch das Verfahren des Krans aus der Ruhstellung geschwenkten Steckanschluss;
- **Fig. 7**: eine Detailansicht auf einen Teil der Einspeiseeinrichtung aus Fig. 2 bis 6;
- **Fig. 8**: eine schematische dreidimensionale Ansicht auf einen Ausschnitt aus Fig. 1 mit einer alternativ ausgestalteten zweiten erfindungsgemäßen Verbindungsvorrichtung vor dem Greifen eines Verbindungssteckers;
- **Fig. 9**: eine schematische dreidimensionale Ansicht auf einen Manipulatorarm der Verbindungsvorrichtung aus Fig. 8 beim Greifen des Verbindungssteckers;
- **Fig. 10**: die Ansicht aus Fig. 9 mit dem Manipulatorarm aus Fig. 9 beim Zuführen des Verbindungssteckers zu einem Steckanschluss der Einspeiseeinrichtung;
- **Fig. 11**: die Ansicht aus Fig. 9 mit dem Manipulatorarm aus Fig. 9 beim Verbinden des Verbindungssteckers mit dem Steckanschluss;
- **Fig. 12**: die Ansicht aus Fig. 9 mit dem Manipulatorarm aus Fig. 9 in einer zurückgezogenen Stellung nach dem Loslassen des Verbindungssteckers;
- **Fig. 13**: die Ansicht aus Fig. 12 mit aus der Ruhstellung geschwenktem Steckanschluss;
- **Fig. 14**: eine vergrößerte Detailansicht der Einspeiseeinrichtung und Verbindungsvorrichtung aus Fig. 9 mit dem Steckanschluss in Ruhestellung;
- **Fig. 15**: die Detailansicht aus Fig. 14 mit aus der Ruhstellung geschwenktem Steckanschluss gemäß Fig. 13;
- **Fig. 16**: eine Seitenansicht auf die z.T. aufgeschnittene Darstellung der Einspeiseeinrichtung und Verbindungsvorrichtung aus Fig. 14 von in Fig. 14 links oben;
- **Fig. 17**: die Seitenansicht aus Fig. 16 mit aus der Ruhestellung geschwenktem Steckanschluss entsprechend Fig. 15;
- **Fig. 18**: eine Seitenansicht auf die z.T. aufgeschnittene Darstellung der Einspeiseeinrichtung und Verbindungsvorrichtung aus Fig. 14 von in Fig. 14 links unten;
- **Fig. 19**: eine schematische Detailansicht einer Steckerverriegelung der Verbindungsvorrichtung aus Fig. 18 von schräg oben;
- **Fig. 20**: eine schematische Detailansicht der Steckerverriegelung aus Fig. 18 und 19 von unten;
- **Fig. 21**: eine Querschnittsansicht durch ein Leitungskabel;
- **Fig. 22**: eine vergrößerte schematische dreidimensionale Detailansicht eines geöffneten Verbindungssteckers aus einer ersten schrägseitlichen Perspektive;
- **Fig. 23**: eine schematische dreidimensionale Ansicht des Verbindungssteckers aus Fig. 22 aus einer zweiten schrägseitlichen Perspektive;
- **Fig. 24**: eine schematische dreidimensionale Ansicht des Verbindungssteckers aus Fig. 22 aus einer dritten Perspektive von schräg unten;
- **Fig. 25**: eine schematische dreidimensionale Ansicht einer Kabelführungsvorrichtung aus Fig. 9 bis 12;
- **Fig. 26**: eine Seitenansicht der Kabelführungsvorrichtung aus Fig. 25 von in Fig. 25 links;
- **Fig. 27**: eine Vorderansicht der Kabelführungsvorrichtung aus Fig. 25 mit einem höhenverstellbaren Pendel in einer ersten, unteren Stellung;
- **Fig. 28**: eine Vorderansicht der Kabelführungsvorrichtung aus Fig. 25 mit dem höhenverstellbaren Pendel in einer zweiten, oberen Stellung;
- **Fig. 29**: eine schematische dreidimensionale Ansicht einer alternativen Kabelführungsvorrichtung;
- **Fig. 30**: einen Teil der schematischen dreidimensionale Ansicht aus Fig. 29 aus einer anderen Perspektive.

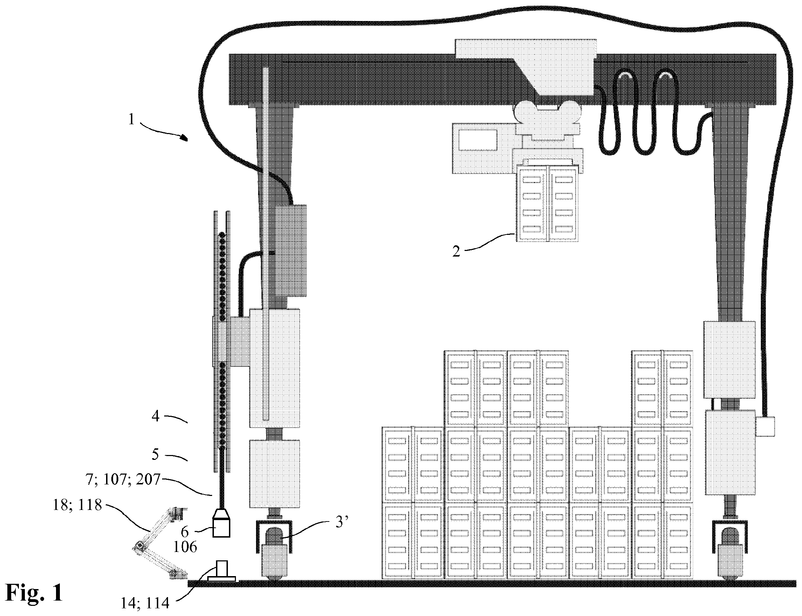

In Fig. 1 ist ein an sich bekannter Kran 1 zum Umsetzen von auf einem Containerstapelplatz gelagerten Containern 2 gezeigt, wie er auf großen Umsetzanlagen, insbesondere in Häfen, verwendet wird. Der Kran 1 kann auf Rädern 3, 3' in eine Fahrrichtung F in einer Fahrgasse neben dem Containerstapelplatz verfahren, welche in der Regel parallel zu den abgestellten Containern 2 verläuft. In der Regel sind in Umsetzanlagen mehrere derartige Containerstapelplätze nebeneinander und ggf. auch hintereinander angeordnet, wobei der Kran 1 und auch andere Kräne zwischen den einzelnen Containerstapelplätzen verfahren werden können.

Um den Kran 1 und die darauf installierten elektrischen Anlagen, z.B. die Motoren für das Anheben und Bewegen der Container 2 wie auch die elektrischen Fahrantriebe der Räder 3, 3' mit elektrischer Energie zu versorgen, und/oder ggf. Daten von und zum Kran 1 zu übertragen, ist auf der Außenseite des Krans 1 eine Leitungskabeltrommel 4 angeordnet, von der ein elektrisches Leitungskabel 5 in eine Ablagerichtung auf- und abgerollt werden kann, entsprechend des Verfahrwegs des Krans 1 in Fahrrichtung F. Üblicherweise stimmen die Ablagerichtung und die Fahrrichtung F überein oder weisen allenfalls geringfügig voneinander ab, da das Leitungskabel 5 bevorzugt parallel zur Fahrrichtung F abgelegt wird. Die Ablage des Leitungskabels 5 erfolgt dabei entsprechend des Verfahrwegs des Krans 1, welcher über die Länge des Verfahrwegs üblicherweise auch geringfügig von der idealen, parallel zu den Containern 2 verlaufenden Linie abweicht. Insofern bedeutet "parallel" hier und im nachfolgenden keine exakte mathematische Parallelität an jedem Punkt des Verfahrwegs, sondern dass das Leitungskabel 5 im Rahmen der Fahr- und Ablageungenauigkeiten neben dem Containerstapelplatz abgelegt wird. Obiges ist an sich bekannt.

Am frei nach unten hängenden Ende weist das Leitungskabel 5 ein als Verbindungsstecker 6 bzw. 106 ausgebildetes Verbindungselement auf, der zur Ablage am Boden wie auch zum Einholen auf die Kabeltrommel 4 mittels einer am Kran 1 angeordneten Kabelführungsvorrichtung 7 bzw. 107 sauber und möglichst spannungsfrei geführt werden kann.

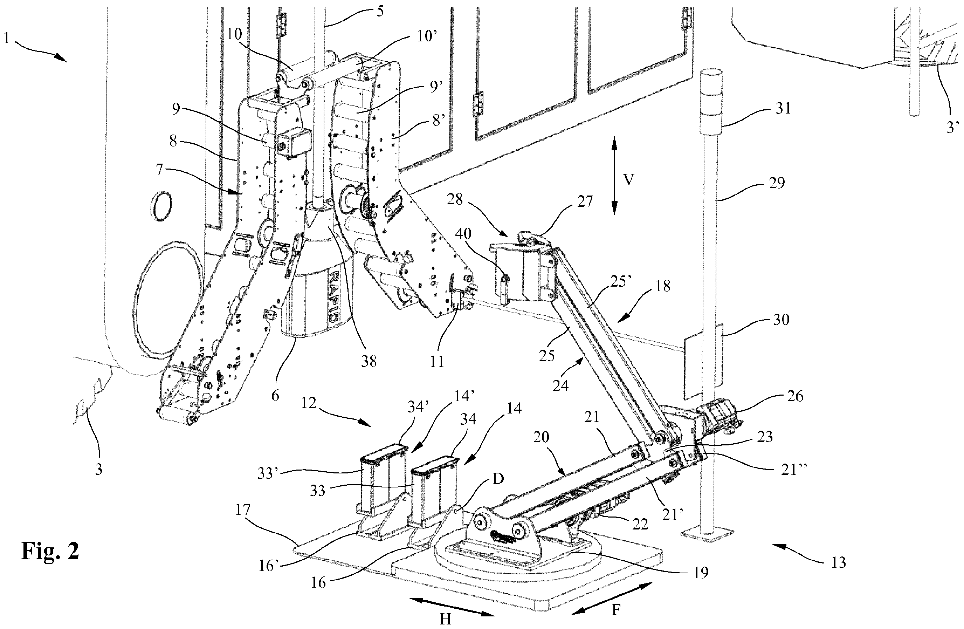

In der detaillierten schematischen dreidimensionalen Ansicht eines ersten Ausführungsbeispiels in Fig. 2 ist nochmals ein Ausschnitt des Krans 1 und der Räder 3, 3' schräg von der Seite gezeigt. Dort ist auch die Kabelführungsvorrichtung 7 im Detail gezeigt, mit der das Leitungskabel 5 sauber und mit möglichst geringen Kraft- und Spannungseinträgen am Boden abgelegt werden kann. Die Kabelführungsvorrichtung 7 weist zwei einander gegenüberliegende und in Fahrrichtung F des Krans 1 versetzte, sich nach unten aufweitende Rollenbögen 8, 8' auf. In den Rollenbögen 8, 8' sind eine Vielzahl von frei drehbaren Längsführungsrollen 9, 9' vorgesehen, an denen das Leitungskabel 5 mit möglichst wenig Reibung entlang geführt werden kann. In seitlicher Richtung H quer zu Fahrrichtung F, erfolgt die Führung des Leitungskabels 5 mittels zweier Seitenführungsrollen 10, 10', welche oberhalb der Rollenbögen 8, 8' angeordnet sind und diese im vorliegenden Ausführungsbeispiel verbinden, was aber nicht notwendig ist. Am in Fig. 2 rechten Rollenbogen 8' ist am unteren Ende eine Sensoreinheit 11 angeordnet, deren Funktion später erläutert wird. Der Sensor 11 könnte aber auch an einer Stelle der Kabelführungsvorrichtung 7 oder auch am Kran 1 angeordnet sein, und könnte auch kabellos mit der Steuerung verbunden sein.

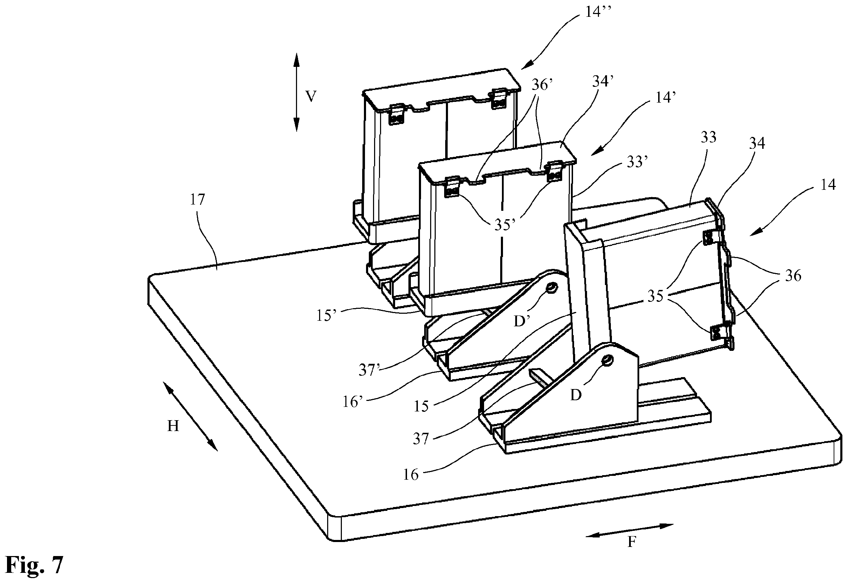

Zur Verbindung des Verbindungssteckers 6 mit einer nicht im Detail gezeichneten elektrischen Spannungsversorgung ist eine ortsfest neben der Fahrgasse des Containerkrans 1 angeordnete Einspeiseeinrichtung 12 mit einer dort angeordneten Verbindungsvorrichtung 13 vorgesehen. Die Einspeiseeinrichtung 12 weist im vorliegenden Fall zwei als Steckanschlüsse 14, 14' ausgebildete Anschlüsse auf, welche mittels zweier als Schwenkplatten 15, 15' ausgebildeter Anschlussteile um Drehachsen D, D' (siehe Fig. 7) drehbar an Lagern 16, 16' angelenkt sind. Die Lager 16, 16' sind am Boden bzw. einem auf dem Boden angebrachten Befestigungselement, insbesondere einer Befestigungsplatte 17, befestigt, welche ihrerseits üblicherweise auf einem festen Fundament befestigt ist. Die Funktion der drehbaren Lagerung wird später anhand von Fig. 7 detailliert beschrieben. Es können aber auch mehr oder weniger Steckanschlüsse an einer Einspeiseeinrichtung vorgesehen sein.

Die Verbindungsvorrichtung 13 weist einen Manipulator 18 auf, welcher zum Greifen und aktiven Bewegen des Verbindungssteckers 6 und zur Herstellung einer Verbindung des Verbindungssteckers 6 mit dem Steckanschluss 14 ausgebildet ist. Dabei weist der Manipulator 18 eine Manipulatorbasis 19 auf, an der ein unterer Manipulatorarm 20 mit vier unteren Teilarmen 21, 21', 21" angelenkt ist, von denen in den Fig. 2 bis 6 zwei ganz und einer teilweise verdeckt sichtbar sind. Der Manipulatorarm 20 kann über einen unteren Manipulatorantrieb 22 bewegt werden, welcher den Teilarm 21" und bevorzugt auch den Teilarm 21' dreht.

An ihrem anderen, oberen Ende sind die unteren vier Teilarme 21, 21', 21" dann so mit einem kreuzförmigen Verbindungsstück 23 verbunden, dass die Teilarme 21, 21' 21" eine erste Parallelogrammführung ausbilden. Weiter schließt sich ein oberer Manipulatorarm 24 daran an, welcher mit zwei oberen Manipulatorarmen 25, 25' an zwei anderen, zu den Gelenkanschlüssen der unteren Teilarme 21, 21', 21"' kreuzförmig versetzten Gelenkanschlüssen des Verbindungsstücks 23 drehbar angelenkt ist. An ihren vorderen, oberen Enden sind die Manipulatorarme 25, 25' wiederum parallelogrammartig miteinander verbunden. Der obere Teilarm 25' kann über einen oberen Manipulatorantrieb 26 um seine unteren Gelenkachsen gedreht werden.

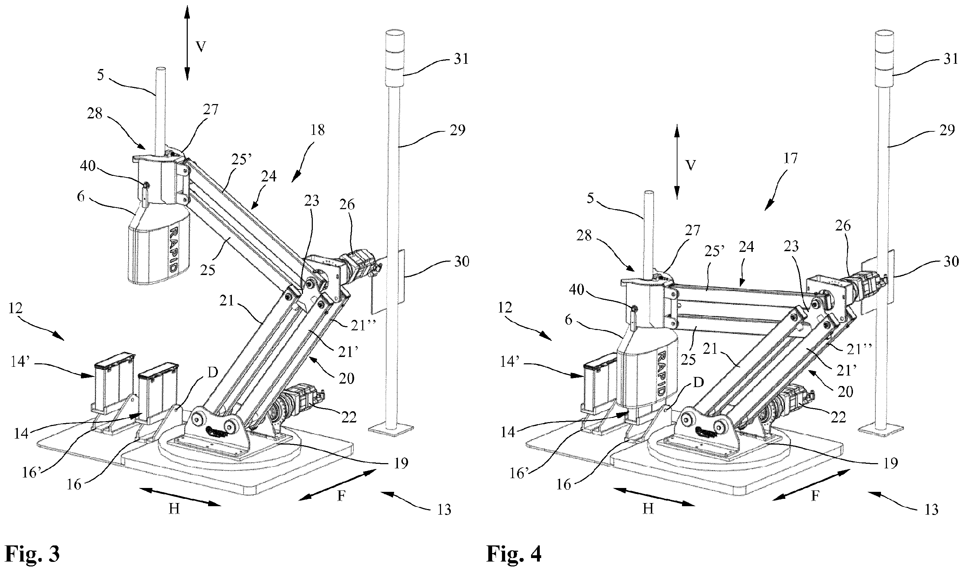

An seinem vorderen oberen Ende ist der obere Manipulatorarm 24 mit einer Greifvorrichtung 27 für den Verbindungsstecker 6 ausgerüstet, um den Verbindungsstecker 6 mittels des nur in horizontaler Zustellrichtung H und vertikaler Zustellrichtung V bewegbaren Manipulator 18 sauber gegenüber dem Steckanschluss 14 positionieren zu können. Die Greifvorrichtung 27 weist eine trichterförmige Einführöffnung 28 auf, um den Verbindungsstecker 6 wie in Fig. 4 gezeigt sicher greifen und bewegen zu können. Dies wird später noch detailliert erläutert.

Um den Verbindungsstecker 6 so gegenüber dem nur in horizontaler Zustellrichtung H quer zur Fahrrichtung F des Krans 1 bewegbaren Manipulator 18 so positionieren zu können, dass die Greifvorrichtung 27 den Verbindungsstecker 6 sicher greifen kann, ist ein Signalmast 29 neben der Verbindungsvorrichtung 13 montiert. Der Signalmast 29 weist ein als Identifikatorplatte 30 ausgebildetes Positionselement auf. Die am in Fig. 2 rechten, unteren Ende des Rollenbogens 8 angeordnete Sensoreinheit 11 detektiert, ob sich die Identifikatorplatte 30 gegenüber der Sensoreinheit 11 in einer Stellung befindet, in der der Manipulator 18 den Verbindungsstecker 6 greifen kann. Falls ja, wird der Greifvorgang durch den Manipulator 18 ausgelöst, der unterschiedliche Abstände in horizontaler Zustellrichtung H in einem gewissen Rahmen ausgleichen kann.

Beispielsweise kann hierzu geprüft werden, ob sich die Identifikatorplatte 30 im Messbereich der Sensoreinheit 11 befindet oder nicht. So kann die Identifikatorplatte 30 einen großflächigen QR-Code und die Sensoreinheit 11 einen sehr schmalen Messbereich aufweisen, innerhalb dessen der QR-Code liegen muss. Alternativ oder zusätzlich kann die Identifikatorplatte 30 auch eine Reflektorfolie mit bekannten Abmessungen und Position aufweisen, wobei dann mit der Sensoreinheit 11 bevorzugt der Abstand hierzu gemessen wird. Sobald der Beginn der Reflektorfolie detektiert wird, kann dann aus den bekannten Abmessungen die Position des Krans 1 bzw. der Kabelführungsvorrichtung 7 gegenüber dem Manipulator 18 bestimmt werden. Dabei kann die Abstandsmessung auch dazu dienen, den Verbindungsstecker 6 schnell und mit möglichst genauem Abstand durch den Manipulator 18 greifen zu können.

Da die Einführöffnung 28 trichterförmig ist, kann ein gewisser Versatz des Verbindungssteckers 6 in Fahrrichtung F auch bei nicht ganz exakter Positionierung des Krans 1 gegenüber der Einführöffnung 28 ausgeglichen werden.

Um dem Fahrer oder Bedienpersonal des Krans 1 die saubere Positionierung und ggf. die sicher hergestellte Verbindung zwischen Verbindungsstecker 6 und Steckanschluss 14 zu signalisieren, ist am oberen Ende des Signalmast 29 eine Signalleuchte 31 mit den klassischen Ampelsignalfarben rot, gelb und grün gut sichtbar angebracht. Rot signalisiert dann, dass noch keine Verbindung hergestellt wurde, Gelb die Verbindungsherstellung und Grün die hergestellte Verbindung und den Rückzug des Manipulators 18, also die Freigabe für das weitere Verfahren. Es können aber auch andere Farben oder Leuchtsignale wie langsames und schnelles Blinken o.ä. verwendet werden. Alternativ kann dem Fahrer durch die Signalleuchte 31 auch angezeigt werden, ob an der Einspeiseeinrichtung 12 noch ein Steckanschluss 14, 14' frei ist oder nicht: Rot signalisiert dann keinen und Grün einen freien Steckanschluss, während Gelb dann signalisiert, dass an der Einspeiseeinrichtung gerade eine Verbindung hergestellt wird.

Der Vorgang des Greifens und Verbindens des Verbindungssteckers 6 mit dem Steckanschluss 14 wird nachfolgend exemplarisch anhand Fig. 3 bis 6 beschrieben.

In Fig. 3 ist der Kran 1 bereits in die bezüglich der Verbindungsvorrichtung 13 günstige Position gefahren und der Manipulatorarm 18 hat den Verbindungsstecker 6 bereits mit der Greifvorrichtung 27 gegriffen. Vorher fährt der Manipulator 18 mit der Greifvorrichtung 27 auf das Leitungskabel 5 oberhalb des Verbindungssteckers 6 zu und umgreift diese. Anschließend fährt die Greifvorrichtung 27 von oben über ein oberes, zylindrisches Greifteil 38 des Verbindungssteckers 6 bis zu einem nicht erkennbaren Anschlag nach unten, bis eine Greifarretierung den Verbindungsstecker 6 an der Greifvorrichtung 27 feststellt.

Dabei weist das Greifteil 38 einen in Fig. 2 gut erkennbaren Zentriertrichter 39 auf, in den einander gegenüberliegende, in der trichterförmigen Einführöffnung 28 angeordnete Zentrierdorne 40 eingreifen. Dabei ist in Fig. 2 außenseitig an der Greifvorrichtung 27 in seiner Position angedeuteter Zentrierdorn 40 dargestellt. Hierdurch kann vorteilhaft erreicht werden, dass der von der Greifvorrichtung 27 gehaltene Verbindungsstecker 6 so ausgerichtet wird, dass er sauber auf einen der Steckanschlüsse 14, 14' aufgesteckt werden kann.

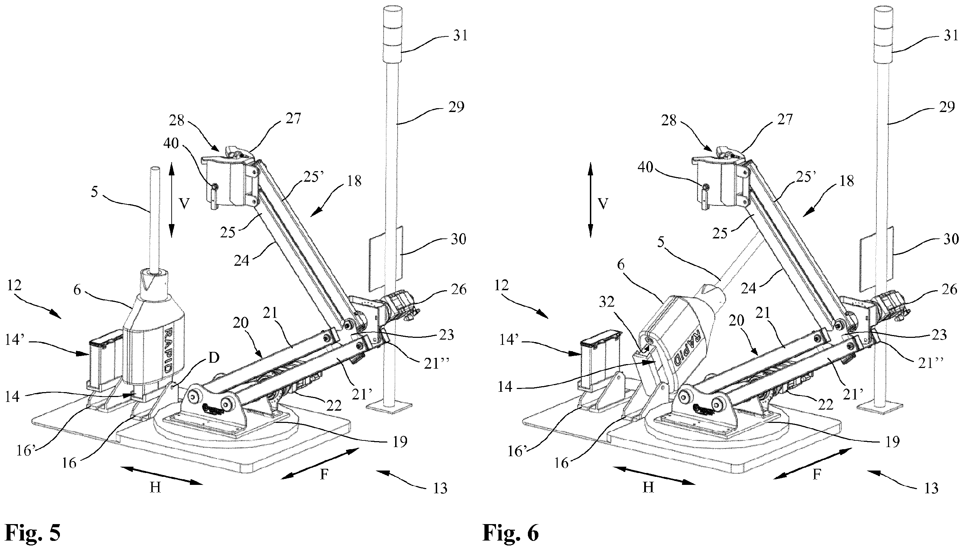

Anschließend bewegt der Manipulator 18, wie in Fig. 3 gezeigt, durch Drehung des oberen Manipulatorarmantriebs 26 und ggf. des unteren Manipulatorarmantriebs 22 den Verbindungsstecker 6 über den Steckanschluss 14, sodass eine nur in Fig. 6 erkennbare Verbindungssteckeröffnung 32 des Verbindungssteckers 6 mit der Außenkontur des Steckanschlusses 14 fluchtet. Anschließend wird der Verbindungsstecker 6 mittels des Manipulators 18 über den Steckanschluss 12 gestülpt und mit einer hier nicht im Detail gezeigten später noch im Detail beschriebenen Steckerverriegelung lösbar verbunden, wie in Fig. 4 erkennbar. Dabei wird über den Steckanschluss 14 auch eine elektrische Verbindung zwischen einer mit dem Steckanschluss 14 verbundenen elektrischen Leistungsversorgung des Containerstapelplatzes und dem Verbindungsstecker 6 des Krans 1 und somit mit dessen elektrischen Versorgungsnetz hergestellt. Ebenso kann eine Datenverbindung, z.B. eine elektrische oder optische Datenübertragung, damit hergestellt werden, z.B. durch Vorsehen von lösbaren Steckverbindungen.

Durch die doppelte Parallelogrammführung des Manipulators 18 kann dabei vorteilhaft sichergestellt werden, dass die Greifvorrichtung 27 bei ihrer Bewegung bezüglich des Steckanschlusses 14 ihren Neigungswinkel nicht verändert. Somit wird der von der Greifvorrichtung 27 bewegte Verbindungsstecker 6 nicht aus der in den Zeichnungen gezeigten idealen Lage gekippt, so dass das Leitungskabel 5 nicht sehr stark gekrümmt oder gar abgeknickt wird. Anstelle einer Parallelogrammführung kann der Manipulator 18 aber auch anders ausgestaltet sein, um dies sicherzustellen, beispielsweise durch Verwendung eines Roboters mit mindestens einem Roboterarm und einer daran angeordneten Greifvorrichtung oder auf andere, dem Fachmann geläufige Art und Weise. Beispielsweise können auch zwei lineare Teleskoparme oder Ausschübe, ein horizontaler und ein vertikaler, verwendet werden.

Dann wird, wie in Fig. 5 gezeigt, die Greifarretierung der Greifvorrichtung 27 gelöst und der Manipulator 18 durch Drehung der Manipulatorarmantriebe 22, 26 vom Leitungskabel 5 und dem Verbindungsstecker 6 nach in Fig. 5 rechts vom Kran 1 wegbewegt. Anschließend wird mit der Signalleuchte 31 für das Bedienpersonal des Krans 1 angezeigt, dass die Verbindung zwischen Verbindungsstecker 6 und Steckanschluss 14 aufgebaut und der Manipulator 18 frei ist, der Kran 1 also von Verbindungsvorrichtung 13 wegfahren und seinen normalen Betrieb aufnehmen kann. Im vorliegenden Ausführungsbeispiel ist die Verbindungsvorrichtung 13 an der Einfahrt einer Fahrgasse für den Kran 1 angeordnet, so dass die Fahrt entlang des Containerstapelplatzes in den Fig. 2 bis 6 nach schräg rechts oben verläuft. Die Verbindungsvorrichtung 13 kann aber auch an anderer Stelle angeordnet werden.

Wie aus dem Stand der Technik bekannt, ist für eine möglichst lange Lebensdauer des Leitungskabels 5 wichtig, dass es möglichst selten, am besten gar nicht über den zulässigen minimalen Biegeradius hinaus gekrümmt oder gar vollständig abgeknickt wird.

Ein Aspekt der vorliegenden Erfindung hat es deshalb zur Aufgabe, eine verbesserte Führung des an einer Einspeiseeinrichtung angeschlossenen Leitungskabels 5 zu ermöglichen und insbesondere die Gefahr eines Abknickens oder einer zu starken Abkrümmung des Leitungskabels 5 beim Verfahren des elektrischen Verbrauchers, insbesondere Krans 1, zu verringern.

Hierzu sieht die Erfindung, wie besonders gut in Fig. 6 und 7 erkennbar, vor, dass die Steckanschlüsse 14, 14' um eine quer zur Fahrrichtung F und bevorzugt parallel zum Boden verlaufende Drehachse D bzw. D' drehbar angeordnet sind. Fährt dann der Kran 1 mit dem Leitungskabel 5 von der Verbindungsstellung aus Fig. 2 in Fahrrichtung F nach rechts weg, wie in Fig. 6 angedeutet, wird das Leitungskabel 5 aufgrund des in Fahrrichtung F schwenkbaren Steckanschlusses 14 nicht oder kaum gekrümmt oder abgeknickt, sondern verläuft vom Steckanschluss 14 weitgehend gerade und in Zugrichtung des Leitungskabels 5 zur Kabelführungsvorrichtung 7 hin. Entfernt sich der Kran 1 dann weiter von der Einspeiseeinrichtung 12 und Verbindungsvorrichtung 13, wird das Leitungskabel 5 Stück für Stück in bekannter Weise neben der Fahrtrasse des Krans 1 abgelegt. Im Gegensatz zum Stand der Technik wird bei der vorliegenden Ausgestaltung aber der Steckanschluss 14 soweit gekippt, dass sich der Verbindungsstecker 6 leicht nach unten neigt und das Leitungskabel 5 mit kaum oder nur geringer Krümmung vom Verbindungsstecker 6 kommend auf den Boden abgelegt wird.

Somit wird das Leitungskabel 5 während des gesamten Ablagevorgangs nur wenig gekrümmt, wodurch eine schonende Leitungsführung ermöglicht, die Lebensdauer des Leitungskabels 5 verlängert und somit die Zuverlässigkeit der Anlage erhöht wird.

Die Verwendung der in den Zeichnungen gezeigten und oben beschriebenen Drehfunktionalität des Steckanschlusses 14 ist auch bei Anlagen mit dauerhafter Verbindung des Leitungskabels 5 mit der Einspeiseeinrichtung 12 möglich, sodass sich auch dann die Vorteile einer verbesserten Leitungskabelführung ergeben.

Das in Fig. 7 gezeigte Detail der Verbindungsvorrichtung 13 zeigt hier einen zusätzlichen Steckanschluss 14" auf, welcher in der Funktionsweise aber genau den Steckanschlüssen 14, 14' entspricht. Da diese identisch ausgebildet sind, wird die Erfindung nachfolgend bevorzugt anhand des einen Steckanschlusses 14 erläutert. Die beiden weiteren Steckanschlüsse 14', 14" sowie deren Teile werden mit den entsprechenden Bezugszeichen wie beim Steckanschluss 14 bezeichnet, ggf. ergänzt um jeweils einen bzw. zwei Apostrophe.

Der Steckanschluss 14 weist ein Steckanschlussgehäuse 33 auf, in welchem die elektrischen Anschlusselemente für einen elektrischen Leistungsanschluss und/oder einen Datenverbindungsanschluss (nicht sichtbar) angeordnet sind.

Um ein Eindringen von Feuchtigkeit, Staub, Wasser, Regen etc. von oben auf die elektrischen Anschlusselemente zu vermeiden, weist das Steckanschlussgehäuse 33 an seinem in Fig. 2 gezeigten Ruhezustand oberen Ende eine Abdeckung 34 auf, welche über ein Paar von Scharnieren 35 drehbar an dem Steckanschlussgehäuse 33 angelenkt ist. Die Abdeckung 34 wird in an sich bekannter Weise federbewirkt in der geschlossenen Stellung gehalten bzw. aus einer offenen Stellung in die geschlossene Stellung zurückbewegt.

Um die Abdeckung 34 beim Aufsetzen bzw. Aufstecken des Verbindungssteckers 6 automatisch öffnen zu können, sind mit der Abdeckung 34 wirkverbundene Öffnungslaschen 36 auf der Seite der Scharniere 35 vorgesehen, welche nach außen über das Steckanschlussgehäuse 33 ragen. Ein entsprechender Anschlag im Verbindungsstecker 6, insbesondere der entsprechende Rand der Verbindungssteckeröffnung 32, drückt die Öffnungslaschen 36 dann beim Aufsetzen und Überstülpen des Verbindungssteckers 6 auf das Steckanschlussgehäuse 33 nach unten, sodass sich die Abdeckung 34 nach oben bewegt. Hierdurch werden die elektrischen Anschlusselemente des Steckanschlusses 14 freigegeben. Anschließend wird der Verbindungsstecker 6 dann noch weiter nach unten bewegt und die im Verbindungsstecker 6 befindlichen, hier männlichen elektrischen und/oder Daten-Anschlusselemente können mit den entsprechenden, hier weiblichen Anschlusselementen im Steckanschlussgehäuse 33 gegen äußere Einflüsse wie Wind, Wasser, Regen, etc. geschützt verbunden werden. Auch wird durch die Abdeckung 34 verhindert, dass Bedienpersonal oder Unbefugte direkt und ungeschützt Zugang zu den Anschlusselementen, insbesondere zu den elektrischen Anschlusselementen erhalten.

Um die Schwenkplatte 15 und somit den Steckanschluss 14 in der in Fig. 2 bis 5 gezeigten Ruhestellung zu halten, kann ein in Fig. 7 gezeigter Anschlag 37 an dem Lager 16 für die Schwenkplatte 15 vorgesehen werden. Bei der gezeigten Ausführung bleibt der Steckanschluss 14 dann gewichtsabhängig in der Ruhestellung. In einer vorteilhaften, nicht gezeigten Ausführung kann auch eine Federkraft auf die Schwenkplatte 15 wirken, um den Steckanschluss 14 in seine Ruhestellung zurückzuführen, wenn er nicht mit dem Verbindungsstecker 6 verbunden ist.

Bei einer alternativen Ausgestaltung der Verbindungsvorrichtung 13, welche bevorzugt auch längs einer Fahrtrasse des Krans 1 angeordnet sein kann, sind die Steckanschlüsse 14, 14' vorteilhaft so ausgebildet, dass sie sich um eine bevorzugt mittig angeordneten Drehachse D in beide Richtungen der Fahrrichtung F drehen können, also eine Ablage des Leitungskabels 5 sowohl auf der eine Seite als auch auf der andere Seite der Steckanschlüsse 14, 14' erfolgen kann. Auch hier ist vorteilhaft eine Haltevorrichtung vorgesehen, welche sicherstellt, dass der nicht verbundene Steckanschluss in die zum Anschließen des Verbindungssteckers 6 geeignete, vorteilhafterweise nach oben weisende Richtung steht. Bevorzugt kann der Steckanschluss 14 dabei solange an der Bodenplatte 17 arretiert werden, bis der Verbindungsstecker 6 sicher mit dem Steckanschluss 14 verbunden ist. Eine solche Ausgestaltung wird später beschrieben und ist für den Fachmann selbstständig realisierbar..

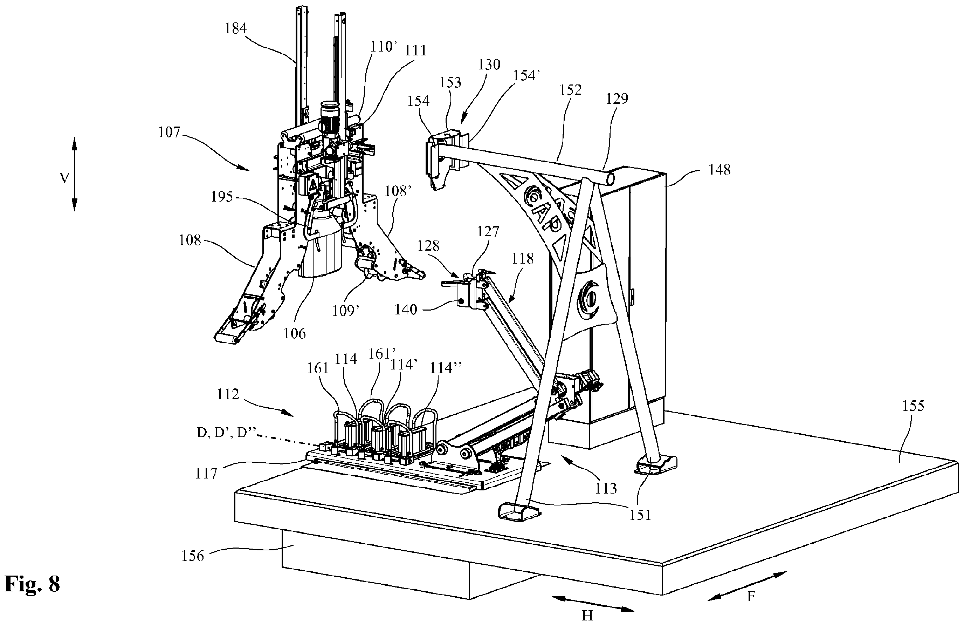

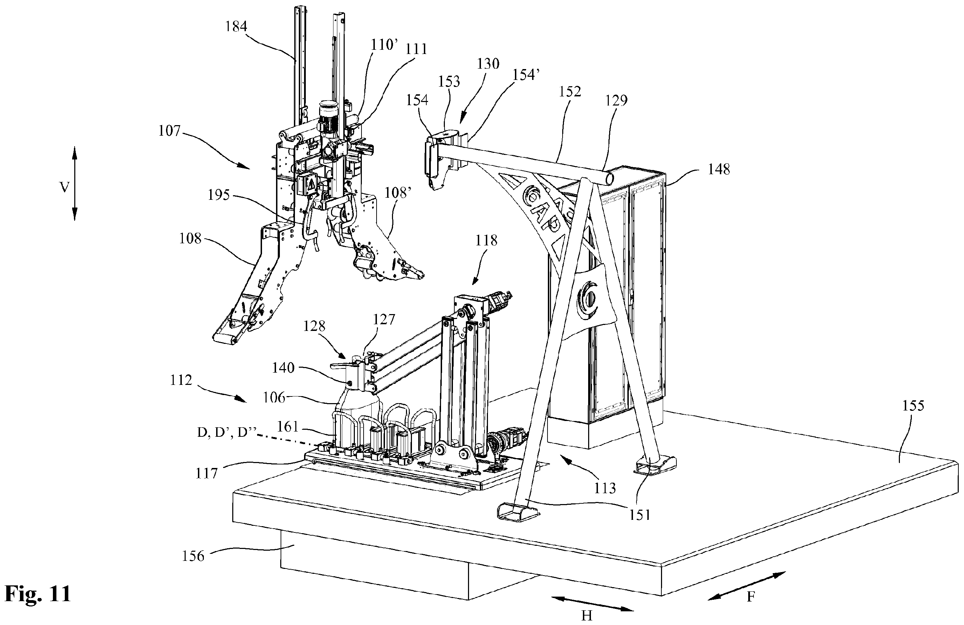

Die Fig. 8 bis 28 zeigen alternative Ausgestaltungen von Teilen des in Fig. 1 grundsätzlich gezeigten Energieübertragungssystems, insbesondere mit abgewandelter Einspeiseeinrichtung 112, Verbindungsvorrichtung 113 sowie Kabelführungsvorrichtung 107. Da diese in weiten Teilen gleich oder ähnlich aufgebaut sind wie bei der in Fig. 2 bis 7 gezeigten Ausführung, werden einander entsprechende Teile mit entsprechenden Bezugsziffern, jeweils ergänzt um die Ziffer "100" verwendet. Auch wird vor allem auf die Unterschiede eingegangen, so das Ausführungen zu entsprechenden Teilen bei der ersten Ausführung nach Fig. 2 bis 7 entsprechend auch für die alternativen Ausgestaltungen der Fig. 8 bis 28 gelten und umgekehrt, soweit nicht anders angegeben.

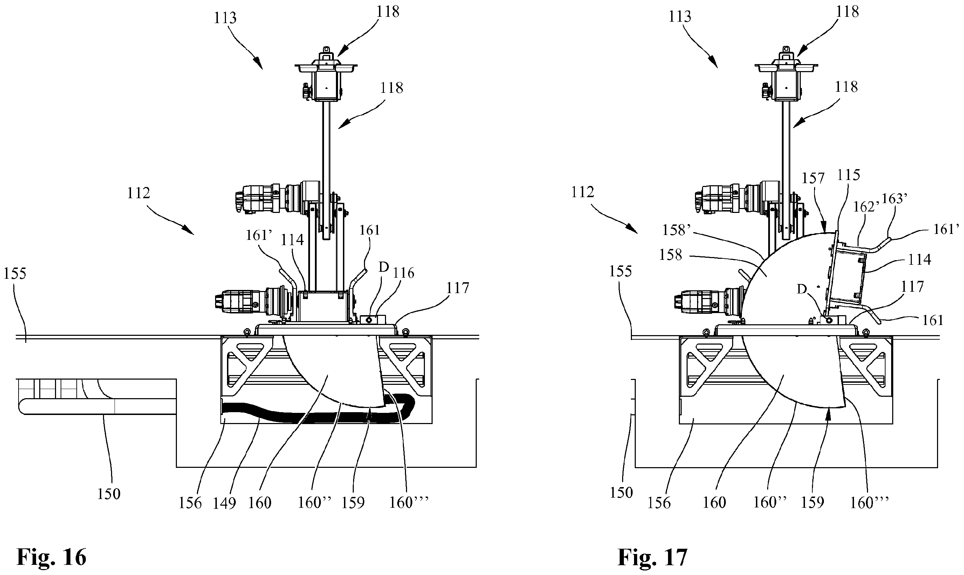

Bei der in Fig. 8 gezeigten Einspeiseeinrichtung 112 ist auch ein Schaltschrank 148 gezeigt, in dem die elektrische Spannungsversorgungseinheit sitzt und zu der in Fig. 16 angedeutete Versorgungs- und Datenkabel 149 führen, welche durch Kabeldurchführungen 150, 150', 150" (siehe Fig. 16 bis 18) in den Schaltschrank 148 führen.

Die in Fig. 8 bis 13 gezeigte Funktionsweise des Energieübertragungssystems entspricht grundsätzlich dem in Fig. 2 bis 7 gezeigten. So wird in Fig. 8 das Leitungskabel 5 mit einem Verbindungsstecker 106 wieder so gegenüber dem Manipulator 118 positioniert, dass eine Greifvorrichtung 127 den Verbindungsstecker 106 bei Bewegung in der horizontalen Zustellrichtung H greifen kann. Anschließend wird der Verbindungsstecker 106 etwas abgelassen, so dass ihn der Manipulator 118 in oben beschriebene Weise mit der Greifvorrichtung 127 greifen und in die zum Aufsetzen auf den Steckanschluss 114 vorgesehene Position bringen zu können. Der Steckanschluss 114 ist wie der Steckanschluss 14 ausgebildet und weist insbesondere ein Steckanschlussgehäuse mit beweglicher Abdeckung auf.

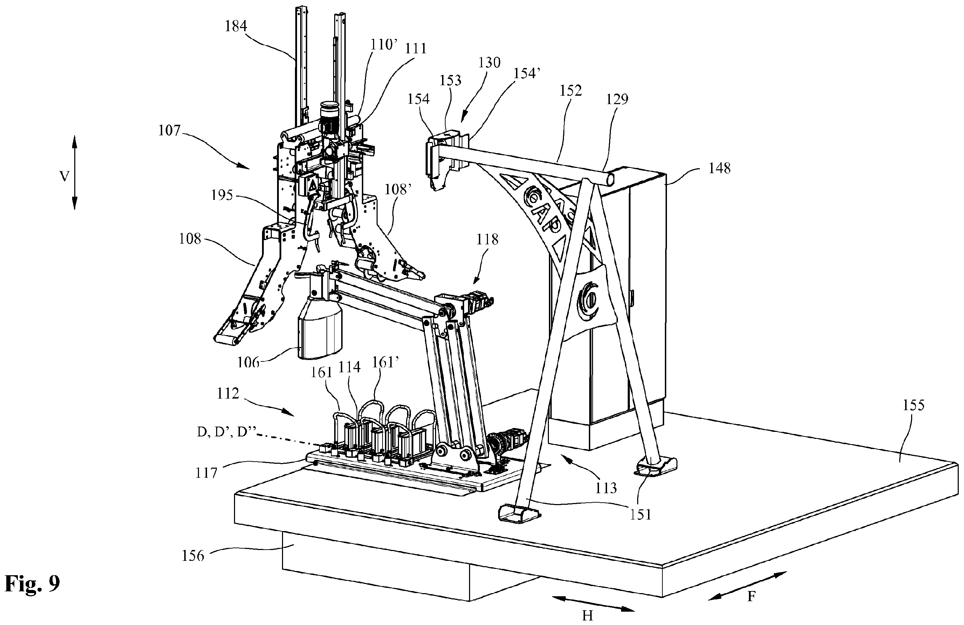

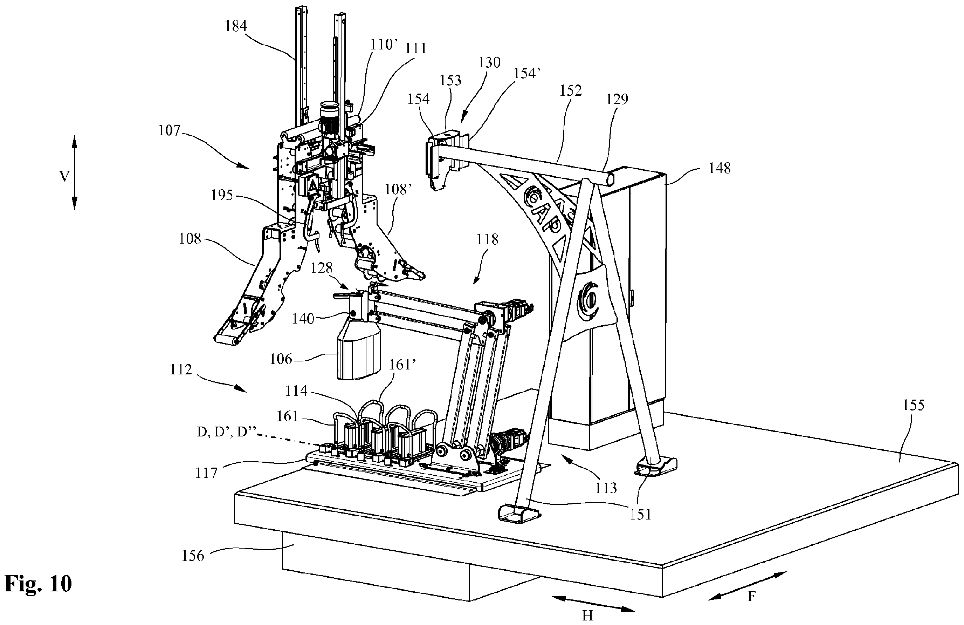

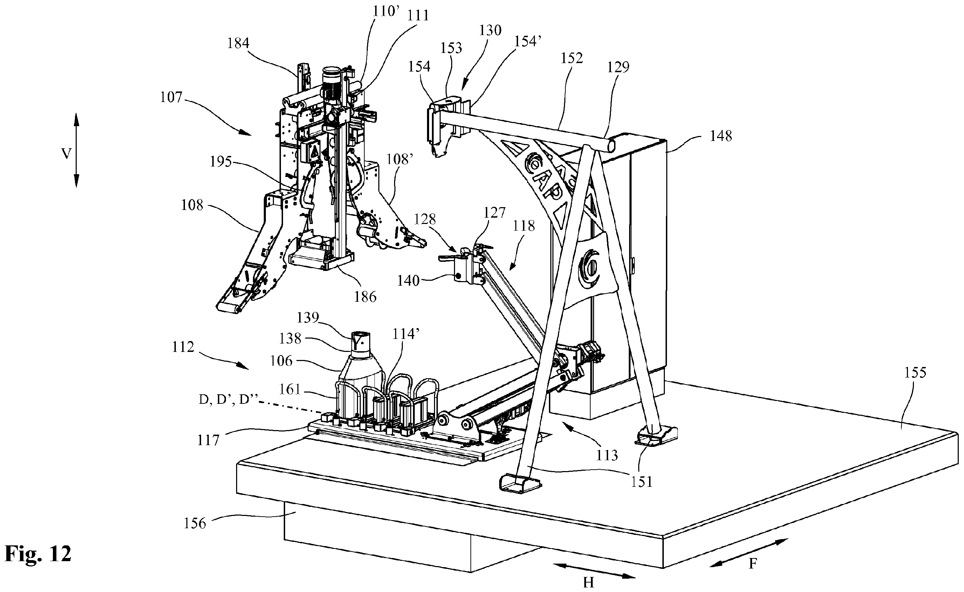

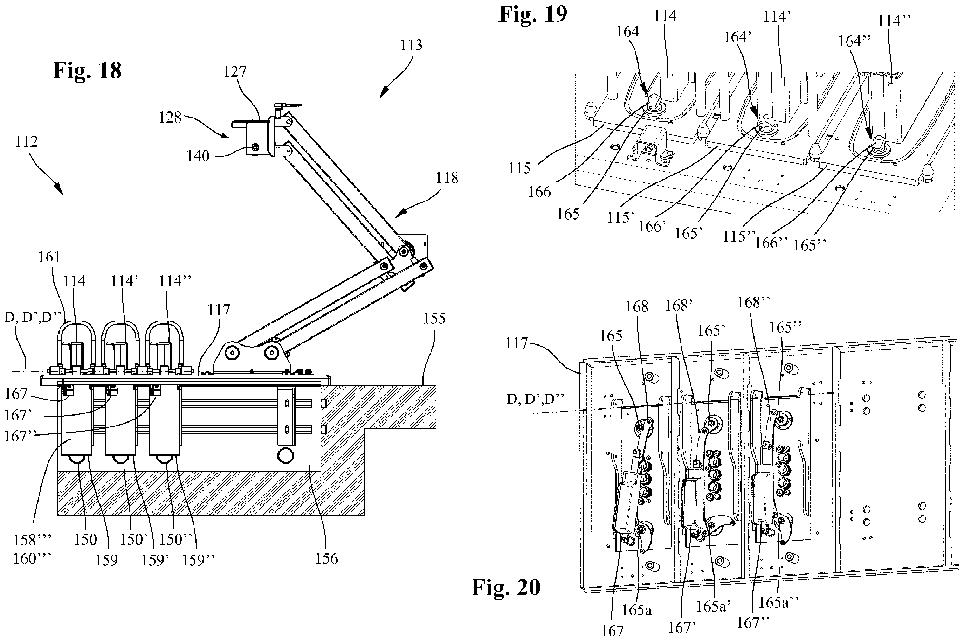

Von der Stellung in Fig. 9 wird der Verbindungsstecker 106 dann wieder zu einem Steckanschluss 114 geführt, auf den er in oben beschriebene Weise aufgesetzt wird, wie in Fig. 10 bis 11 gezeigt. Dabei wird der Verbindungsstecker 106 wieder an der Einspeiseeinrichtung 112 arretiert, was nachfolgend anhand von Fig. 19 und 20 detailliert erläutert wird. Anschließend kann wie in Fig. 12 gezeigt der Manipulator 118 vom Verbindungsstecker 106 gelöst und in seine Ruheposition gefahren werden.

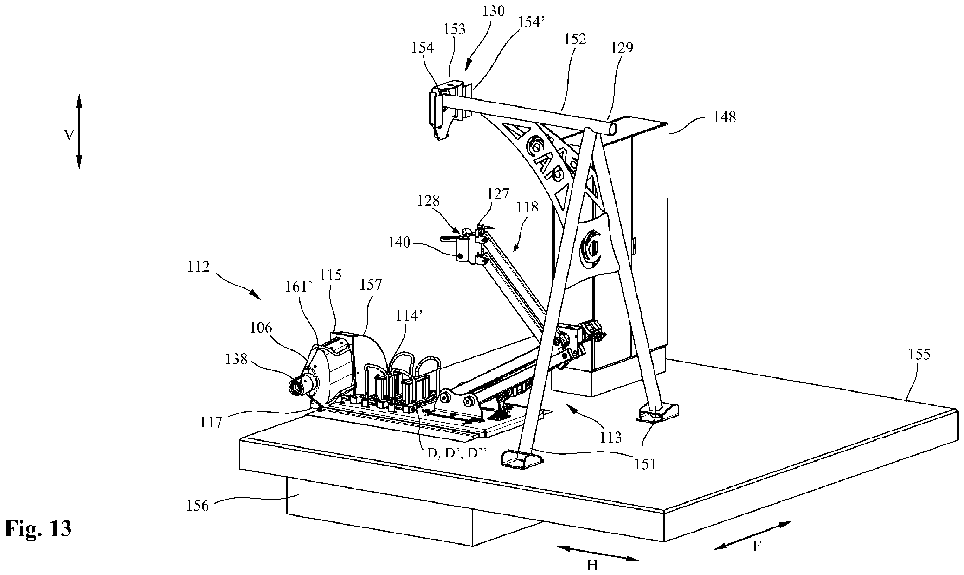

In Fig. 13 ist gezeigt, dass durch das Verfahren des nicht gezeichneten Krans 1 der Verbindungsstecker 106 mit Steckanschluss 114 wieder um die Drehachse D aus der in Fig. 12 gezeigten Ruhestellung geschwenkt wird.

Der in Fig. 8 bis 13 gezeigte alternative Signalmast 129 weißt dabei zwei schräge Standfüße 151 auf, an denen am vorderen, freien Ende eines Gabelbaums 152 eine alternative Identifikatorplatte 130 trägt. Entsprechend ist an der Kabelführungsvorrichtung 107 ein alternativ ausgebildeter Sensor 111 angeordnet, welcher zur Detektion der Identifikatorplatte 130 verwendet wird. Dabei kann vorteilhaft ein Abstandssensor 111 mit einem schmalen Messbereich verwendet werden. Die Identifikatorplatte 130 hat vorteilhaft einen in horizontaler Zustellrichtung H vorderen Zentralbereich 153 und sich daran in Fahrrichtung F beidseitig anschließende, gegenüber dem Zentralbereich 153 in horizontaler Zustellrichtung H nach hinten, also vom Kran 1 weg, versetzte Randbereiche 154, 154'. Bevorzugt weist die Identifikatorplatte 130 einen Reflektor, z.B. eine Reflektorfolie aus, um das vom Abstandsensor 111 ausgesendete Signal möglichst gut zu reflektieren. Ggf. kann aber auch wieder die Identifikatorplatte 31 aus dem weiter oben beschriebenen Ausführungsbeispiel verwendet werden.

Um den Verbindungsstecker 106 mittig zu dem Zentralbereich 153 zu positionieren, detektiert der Abstandssensor 111 beim Anfahren in Fahrrichtung F von in Fig. 8 rechts oder links zunächst den Abstand zu einem der beiden hinteren Randbereiche 154, 154' . Wenn er dann weiter in Fahrrichtung F zum Zentralbereich 153 hin fährt, detektiert er beim räumlichen Erfassen des Zentralbereichs 153 eine plötzliche Abstandsverringerung und somit den Beginn des vorderen Zentralbereichs 153. Über die bekannten geometrischen Abmessungen, insbesondere die Ausdehnung des Zentralbereichs 153 in Fahrrichtung F, kann dann der noch notwendige Verfahrweg in Fahrrichtung F bestimmt werden, um den Verbindungsstecker 106 möglichst exakt auf die Greifvorrichtung 127 zu positionieren.

Auf diese Weise kann die Positionierung des Verbindungssteckers 106 gegenüber dem Manipulator 118 vereinfacht werden, wobei lediglich an der Kabelführungsvorrichtung 107 ein aktiver Sensor 111 angeordnet werden kann, während es sich bei der Identifikatorplatte 130 um ein passives Element handeln kann. Die Identifikatorplatte 130 kann dabei auch andere Ausgestaltungen aufweisen, welche eine klar definierte Änderung des Abstands durch den Sensor 111 detektieren lässt. Z.B. kann der Zentralbereich nach hinten versetzt sein und die Randbereiche näher beim Kran 1. Insbesondere können in einer vereinfachten Ausführung die Randbereiche 154, 154' weggelassen werden, so dass nur der Übergang von der gar nicht oder nur schlecht reflektierenden Umgebung zum gut reflektierenden Bereich der der Identifikatorplatte bestimmt werden muss. Auch können ggf. der Zentralbereich 153 und die sich daran anschließende Randbereiche 154, 154', seien sie zueinander in horizontaler Zustellrichtung H versetzt oder nicht, unterschiedlich gut reflektierende Eigenschaften aufweisen, so dass durch das Maß der zurückgeworfenen Signalstärke eine Unterscheidung ermöglicht wird.

Weiter unterscheidet sich die Ausgestaltung nach Fig. 8 bis 28 durch die Gestaltung der schwenkbaren Steckanschlüsse 114 von der Ausführung in Fig. 2 bis 7. Es wird deshalb nachfolgend wiederum vor allem auf die Unterschiede eingegangen, während für gleiche oder ähnliche Bauteile wiederum die oben zu Fig. 1 gemachten Ausführungen entsprechend gelten. Auch hier wird aufgrund der identischen Ausbildung der Steckanschlüsse 114, 114', 114" die Erfindung weiter anhand des Steckanschlusses 114 beschrieben, sofern nichts anderes angegeben. Entsprechend gelten diese Ausführung auch für die anderen Steckanschlüsse 114', 114".

Wie aus Fig. 16 bis 18 hervorgeht, ist der Steckanschluss 114 wieder mit einer Schwenkplatte 115 um eine Drehachse D an einer Befestigungsplatte 117 um ein Lager 116 drehbar angebracht. Der Steckanschluss 114 könnte aber auch direkt drehbar an der Befestigungsplatte 117 angeordnet sein. Die Drehachse D verläuft dabei im wesentlichen horizontal und in Richtung der horizontalen Zustellrichtung H des Manipulators 118. Die Befestigungsplatte 117 ist über einer im Fundament 155 vorgesehenen Grube 156 angeordnet. Wie in Fig. 16 und 18 erkennbar, münden in der Grube 156 die vom Schaltschrank 148 kommenden Kabeldurchführungen 150, in denen die in Fig. 16 angedeuteten Energieversorgungs- und Datenkabel 149 verlaufen. Diese Kabel 149 reichen jeweils durch eine unterhalb des Steckanschlusses 114 angeordnete Verbindungsöffnung in der Bodenplatte 117 zur Unterseite des Steckanschlusse 114, wo sie mit den hier weiblichen Anschlusselementen des Steckanschlusses 114 elektrisch verbunden sind, wie in Fig. 20 angedeutet.

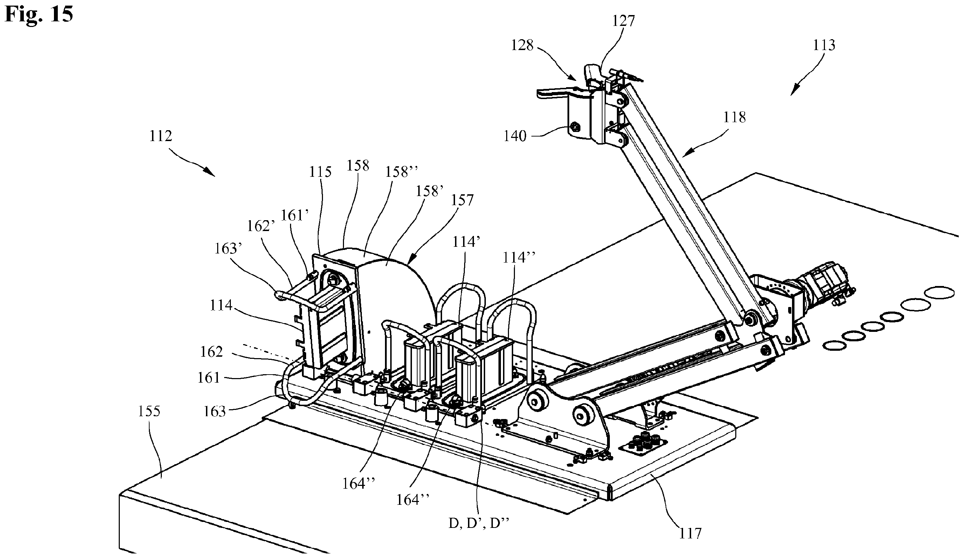

Um beim Verschwenken des Steckanschlusses 114 die an seiner Unterseite angeordneten Kabel 149 sauber zu führen und gegenüber der Umgebung abkapseln zu können, u.a. auch aus Berührungsschutzgründen, ist an der Unterseite des Steckanschlusses 114, insbesondere der Schwenkplatte 115, eine mit der Schwenkplatte 115 um die Drehachse D bewegliche erste Schutzumhausung 157 vorgesehen. An der Unterseite der Schwenkplatte 115 schließen sich identisch ausgebildete, ca. 100° messende kreissektorförmige Seitenwandungen 158, 158' sowie eine die Kreisbogenseiten der Seitenwandungen 158, 158' verbindende Stirnwandung 158" der ersten Schutzumhausung 157 an, wie in Fig. 15 und 17 gut erkennbar. Eine weitere Stirnseite zwischen den Seitenwandungen 158, 158', der Stirnwandung 158" und der Schwenkplatte 115 bleibt frei und bildet eine in Fig. 18 von vorne sichtbare Öffnung 158"' für die von der Kabeldurchführung 150 kommenden Kabel 149.

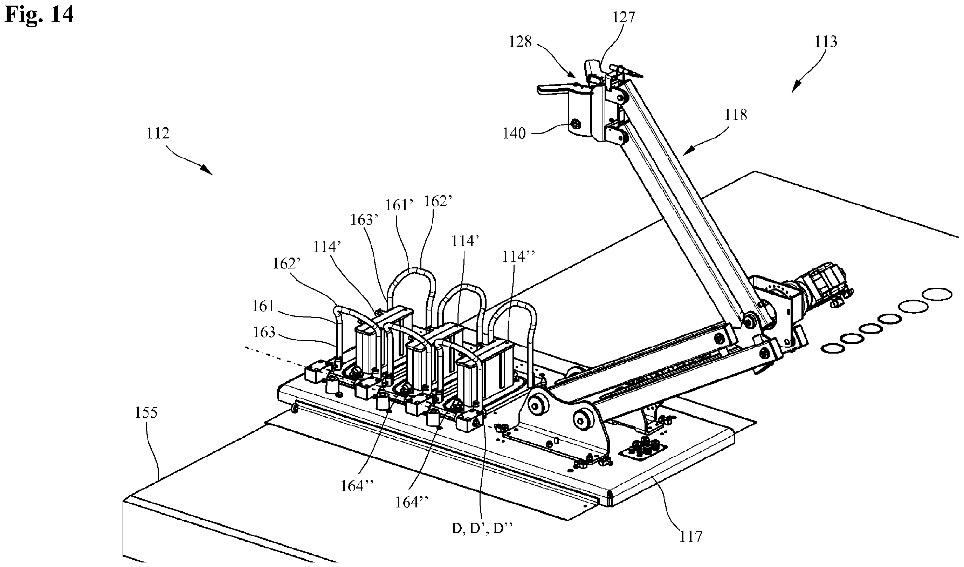

Die ersten Schutzumhausung 157 läuft in einer zweiten, fest an der Unterseite der Bodenplatte 117 angeordneten, etwas größer, aber entsprechend ausgebildeten zweiten Schutzumhausung 159 mit kreissektorförmigen Seitenwandungen 160, 160', eine diese verbindende Stirnwandung 160" sowie eine stirnseitige Öffnung 160"' für die von der Kabeldurchführung 150 kommenden Kabel 149. Alternativ kann aber auch auf die zweite Schutzumhausung 159 verzichtet werden, da die erste Schutzumhausung 157 bei abgesenkter Schwenkplatte 115 gemäß Fig. 14 und 16 ebenfalls einen Schutz für die Kabel 149 bietet.

Die Kabel 149 sind dabei so lang bemessen, dass die in Fig. 15 und 17 gezeigte vollständig umgeklappte Stellung des Steckanschlusses 114 möglich ist. In der in Fig. 14 und 16 gezeigten vollständig eingeschwenkten Stellung des Steckanschlusses 114 faltet oder legt sich die überschüssige Kabellänge des Kabels 149 bevorzugt innerhalb der Schutzumhausungen 157, 159 zusammen. Da die Kabel 149 im Bereich der Schutzumhausungen 157, 159 vollständig von diesen umgeben sind, können die Kabel 149 beim Verschwenken des Steckanschlusses 114 zuverlässig geführt werden, so dass weder eine Beschädigung der Kabel 149 noch eine Behinderung der Bewegung des Steckanschlusses 114 zu befürchten ist. Bevorzugt kann zur Führung der Kabel 149 eine nicht gezeichnete Energiekette verwendet werden, welche auf dem Boden der Grube 156 verläuft und dann in Fig. 17 S-förmig nach oben verläuft

Um eine nicht ganz exakte Positionierung des Verbindungssteckers 106 gegenüber dem Steckanschluss 114 noch ausgleichen zu können, ist an den schmalen Stirnseiten der Schwenkplatte 115 je ein Zentrierbügel 161, 161' angeordnet. Diese weisen dabei einen unteren, vertikalen Führungsbereich 162, 162' auf, an die sich ein oberer, vom Steckanschluss 114 weg weisender, schräger Einführungsbereich 163, 163' anschließt. Bei eingestecktem Steckanschluss 114, wie beispielsweise in Fig. 13 gezeigt, umgreifen die vertikalen Führungsbereiche 162, 162' den Verbindungsstecker 106, wodurch eine verbesserte Positionierung, insbesondere Vorzentrierung des Verbindungssteckers 106 auf dem Steckanschluss 114 erreicht werden kann.

Um ein versehentliches Lösen des Verbindungssteckers 106 vom Steckanschluss 114 zu verhindern, was insbesondere während der Energieübertragung ungünstig ist, sind an den Schwenkplatten 115, 115', 115" an den Stirnseiten der Steckanschlüsse 114, 114', 114" jeweils Steckerverriegelungen 164, 164', 164" vorgesehen, welche insbesondere in Fig. 19 und 20 gut erkennbar sind. Aufgrund der identischen Ausbildung der Steckerverriegelungen 164, 164', 164" wird nachfolgend wieder nur die Steckerverriegelung 164 beschrieben, soweit nicht anders angegeben.

Die Steckerverriegelung 164 weist dabei jeweils einen durch die Schwenkplatte 115 im Bereich des Verbindungssteckers 106 reichenden Verriegelungsbolzen 165 auf, der nach oben über die Schwenkplatte 115 ragt und einen länglichen Verriegelungskopf 166 aufweist. Vorteilhaft kann auf der gegenüberliegenden Stirnseite des Steckanschlusses 114 ein weiterer, identisch ausgebildeter Verriegelungsbolzen 165a angeordnet sein, wie in Fig. 20 angedeutet.

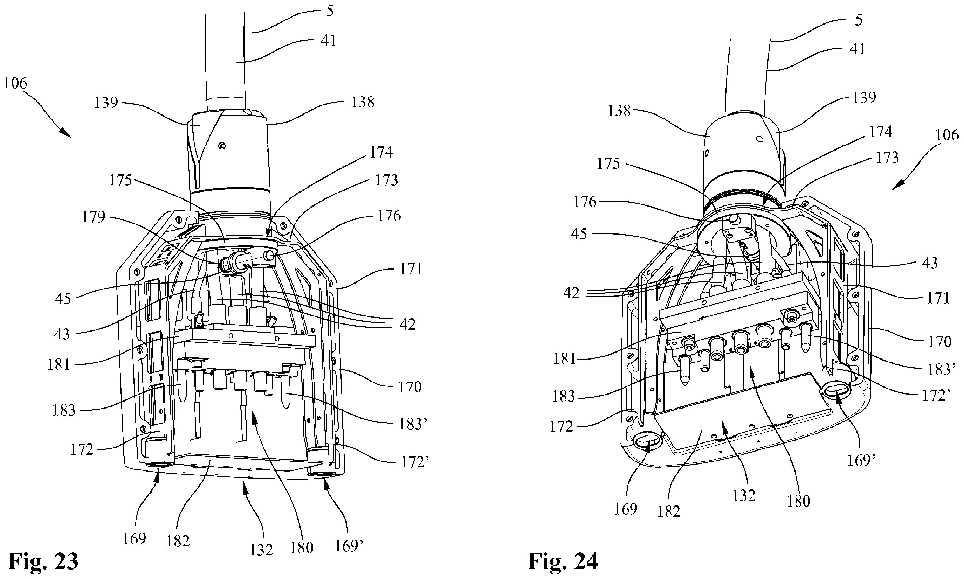

In der geöffneten Stellung ist der Verriegelungskopf 166 so ausgerichtet, dass er in eine entsprechende, insbesondere in Fig. 24 gut erkennbare längliche Verriegelungsöffnung 169 am Verbindungsstecker 106 durchgesteckt werden kann.

Wenn der Verbindungsstecker 106 dann ganz auf den Steckanschluss 114 aufgesetzt ist, können der Verriegelungskopf 166 sowie der nicht gezeichnete Verriegelungskopf des Verriegelungsbolzens 165a mittels eines in Fig. 20 gezeigten Verriegelungsantriebs 167 über eine Hebelanordnung 168 gleichzeitig von einer geöffneten Stellung, wie in Fig. 19 und 20 anhand der äußeren beiden Steckanschlüssen 114, 114" gezeigt, in eine in Fig. 19 und 20 beim mittleren Steckanschluss 114' gezeigte, um vorteilhaft 90° verdrehte geschlossene Stellung bewegt noch. Ggf. kann aber auch eine geringere oder größere Drehung ausgewählt werden, um sicher zu verriegeln. Bevorzugt kann der Verriegelungsantrieb 167 über eine Hebelanordnung 168 gleichzeitig den Verriegelungsbolzen 165 sowie den gegenüberliegenden Verriegelungsbolzen 165a antreiben.

Anstelle einer Hebelanordnung 168 kann aber auch für jeden Verriegelungsbolzen 165, 165' 165" bzw. 165a, 165a' 165a" ein eigener Verriegelungsantrieb vorgesehen werden. Grundsätzlich könnte auch an jedem Steckanschluss 114, 114', 114" nur eine Steckerverriegelung vorgesehen werden.

Zusätzlich dient die Steckerverriegelung 164 vorliegend dazu, die Schwenkplatte 115 an der Bodenplatte 117 zu fixieren, wenn kein Verbindungsstecker 114 angeschlossen ist. Hierzu greift der in Fig. 20 untere Hebelarm, welcher den unteren, in Fig. 19 hinteren Verriegelungsbolzen 165a antreibt, in der in Fig. 19 und 20 gezeigten Fixierstellung unter die Bodenplatte 117, so dass die Schwenkplatte 115 nicht mit um die angedeutete, oberhalb der Bodenplatte 117 verlaufende Drehachse D von der Bodenplatte 117 weg verschwenkt werden kann. Im Gegensatz dazu ist die Fixierung der mittleren Schwenkplatte 115' geöffnet, so dass diese gekippt werden könnte. Alternativ oder zusätzlich kann auch eine von der Steckerverriegelung 164 unabhängige Halterung, insbesondere Steckanschlussverriegelung zur lösbaren Befestigung des Steckanschlusses 114 in der Ruhestellung an der Bodenplatte 117 vorgesehen werden, bis der Verbindungsstecker 114 und Steckanschluss 114 sicher miteinander verbunden sind.

Ein weiterer Aspekt der Erfindung sieht vor, dass das Leitungskabel 5 zum besseren automatischen Verbinden einen speziellen Aufbau aufweist. Weiter kann vorteilhaft auch der Verbindungsstecker 6, 106 speziell ausgebildet sein, um das Greifen mit dem Manipulator 18, 118 und insbesondere der Greifvorrichtung 27, 127 zu verbessern, und zwar bei beiden oben beschriebenen Ausführungsbeispielen.

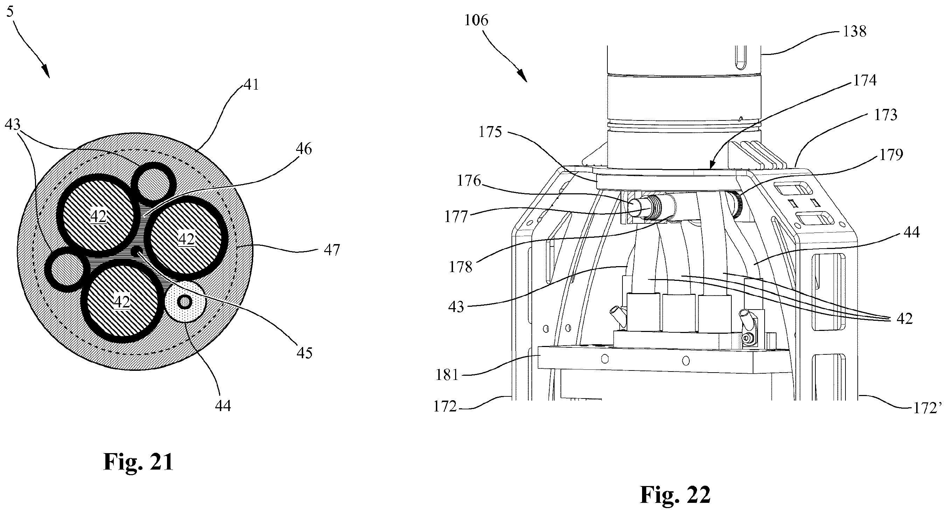

Dies wird nachfolgend vor allem anhand von Fig. 21 bis 24 ausführlich beschrieben.

Fig. 21 zeigt einen Querschnitt durch ein Leitungskabel 5, beispielsweise etwas oberhalb des Verbindungssteckers 106. Dabei weist das Leitungskabel 5 einen aus einem flexiblen Material hergestellten Außenmantel 41 auf, beispielsweise aus Gummi, PVC oder einen anderen elastischen Kunststoff. Der Außenmantel 41 umgibt drei hier symmetrisch angeordnete Phasenleiter 42 für die elektrische Energieübertragung, einen in zwei Einzelleiter 43 aufgeteilten Schutzleiter sowie einen Datenübertragungsleiter 44, insbesondere ein optisches Datenübertragungskabel. Weiter ist im Kern des Leitungskabels 5 ein flexibles, aber dennoch robustes Tragorgan 45 vorgesehen, beispielsweise einen Aramidseil oder Drahtseil. Das Tragorgan 45 ist umgeben von einem Füllmaterial und/oder Formteilen 46, welche eine Stütz- und Haltefunktion für die weiteren Leiter 42 bis 44 des Leitungskabels 5 ausüben.

Hierdurch können die im Leitungskabel 5 angeordneten empfindlichen Leiter 42 bis 44 von Zug entlasten werden, während das Tragorgan 45 maßgeblich zur Aufnahme der Längskräfte beim Auf- und Abrollen des Leitungskabels 5 dient. Zusätzlich kann im Außenmantel 41 eine weitere Zugentlastung 46 vorgesehen werden, beispielsweise ein in den Außenmantel 41 eingebettetes Geflecht oder Gewebe.

Damit das Tragorgan 45 als Zugentlastung dienen kann, wird es in dem in Fig. 22 bis 24 im Detail gezeigten, teilweise auseinander gebauten Verbindungsstecker 106 wie nachfolgend beschrieben befestigt.

Der Verbindungsstecker 106 weist zwei Steckerverkleidungshälften auf, von denen in Fig. 22 und 23 jeweils nur die eine Steckerverkleidungshälfte 170 gezeigt ist, während die andere entfernt ist, um das Innenleben des Verbindungssteckers 106 zeigen zu können.

Weiter ist ein aus einem robusten Material, insbesondere einem Stahlblech hergestellter, im wesentlichen U-förmiger Stützrahmen 171 vorgesehen, welcher an seinen freien Schenkelenden 172, 172' jeweils die oben bereits genannten, als Langloch ausgebildeten Verriegelungsöffnungen 169, 169' aufweist. Das die freien Schenkelenden 172, 172' verbindende Mittelteil 173 des Stützrahmens 171 weist dann eine kreisförmige Öffnung 174 auf, durch welche das im wesentlichen hohlzylindrisch ausgebildete Greifteil 138 des Verbindungssteckers 106 von in Fig. 22 und 23 unten durchgesteckt ist. Das Greifteil 138 schlägt mit einem kreisringförmigen Außenflansch 175 am Stützrahmen 171 an und wird dort befestigt, beispielsweise verschraubt oder vernietet.

Um Belastungen in Längsrichtung des Leitungskabels 5 aufnehmen zu können, kann zum einen die Zugentlastung 47 des Außenmantels 41 im Greifteil 138 und/oder am Stützrahmen 171 festgeklemmt sein (nicht sichtbar). Zum anderen ist am kreisringförmigen Außenflansch 175 des Greifteils 138 ein quer zur Längsrichtung des Leitungskabels 5 verlaufender Spannbolzen 176 vorgesehen. Der Spannbolzen 176 weist eine nicht gezeichnete Befestigung für das Tragorgan 45 auf, insbesondere eine Durchgangsöffnung, durch welche das Tragorgan 45 durchgesteckt wird. Auf dem Spannbolzen 176 ist ein Federelement, insbesondere eine Spiralfeder 177 angeordnet welche ggf. mit einer umgebenden Spannbolzenhülse 178 verbunden ist, an der ggf. das eine Ende des Tragorgans 45 befestigt ist. Zum Spannen des Tragorgans 45 wird der Spannbolzen 176 zunächst in seiner Achsrichtung gegen den Druck einer auf einem abgestuften Ende 178 des Spannbolzens 176 sitzenden Spiralfeder 177 aus einer in Fig. 22 gezeigten Rutschsicherung 179 herausgedrückt. Anschließend wir der Spannbolzen 176 mehrfach in Aufwickelrichtung gedreht, sodass das Tragorgan 45 mit mehreren Wicklungen auf dem Spannbolzen 176 aufwickelt wird. Um zu verhindern, dass sich das Tragorgan 45 unter Belastung wieder abwickelt, drückt die Spiralfeder 177 anschließend den Spannbolzen 176 wieder in die in Fig. 22 gut erkennbare, Rutschsicherung 179. Anstelle der Spiralfeder 177 können auch andere Federelemente verwendet werden, z.B. Tellerfedern, welche den Spannbolzen nach dem Spannen des Tragorgans 45 wieder zuverlässig in die Rutschsicherung 179 drücken. Die Rutschsicherung 179 kann dabei vorteilhaft eine gerändelte Innenbohrung aufweisen, mit dem ein ebenfalls gerändeltes Ende des Spannbolzens 176 zusammenwirkt.

Die unterschiedlichen Leiter 42 bis 44 hingegen werden unbelastet durch die kreisförmige Öffnung 174 im Stützrahmen 171 in den Bereich zwischen den freien Schenkelenden 172, 172 des Stützrahmens 171 geführt und dort mit jeweiligen, hier männlichen elektrischen Anschlusselementen 180 des Verbindungssteckers 106 elektrisch und mechanisch verbunden. Die einzelnen männlichen Anschlusselemente 180 sind an einem Anschlussträger 181 angeordnet, welcher in die von der Verbindungssteckeröffnung 132 zum Greifteil 138 verlaufende Längsrichtung, also auch in Längsrichtung des Leitungskabels 5, ortsfest gehalten und quer zu dieser Längsrichtung frei schwimmend gelagert ist.

Um die männlichen Anschlusselemente 180 gegen unerlaubtes Berühren und andere äußere Einflüsse zu schützen, wird die Verbindungssteckeröffinung 132 durch eine Schutzklappe 182 verschlossen. Die Schutzklappe 182 wird dabei federbewirkt in der in Fig. 21 und 22 gezeigte Schließstellung gehalten, kann aber beim Aufsetzen des Verbindungssteckers 106 auf den Steckanschluss 114 durch die Kraft des Manipulators 118 in den Bereich zwischen den freien Schenkelenden 172, 172' weggeklappt werden.

Um die männlichen Anschlusselemente 180 des Verbindungssteckers 106 in entsprechende weibliche Anschlusselemente (nicht gezeigt) des Steckanschlusses 114 einführen zu können, sind am Anschlussträger 181 längliche Zentrierbolzen 183 mit kegelförmigem Ende vorgesehen, welche in entsprechende Zentrieröffnungen des Steckanschlusses 114 (nicht gezeigt) eingreifen.

In Fig. 23 gut erkennbar ist der Zentriertrichter 139 am Greifteil 138, welcher zusätzlich zu der in Fig. 2 bis 7 gezeigten Ausführung an seinem unteren Ende schlitzförmig in einen Zentrierschlitz verlängert ist. Hierdurch kann über die in der Einführöffnung 128 der Greifvorrichtung 127 vorgesehenen, zeichnerisch in ihrer Position angedeuteten Zentrierdorne 140 der Verbindungsstecker 106 schon beim Greifen mit der Greifvorrichtung 127 möglichst gut auf den Steckanschluss 114 ausgerichtet werden.

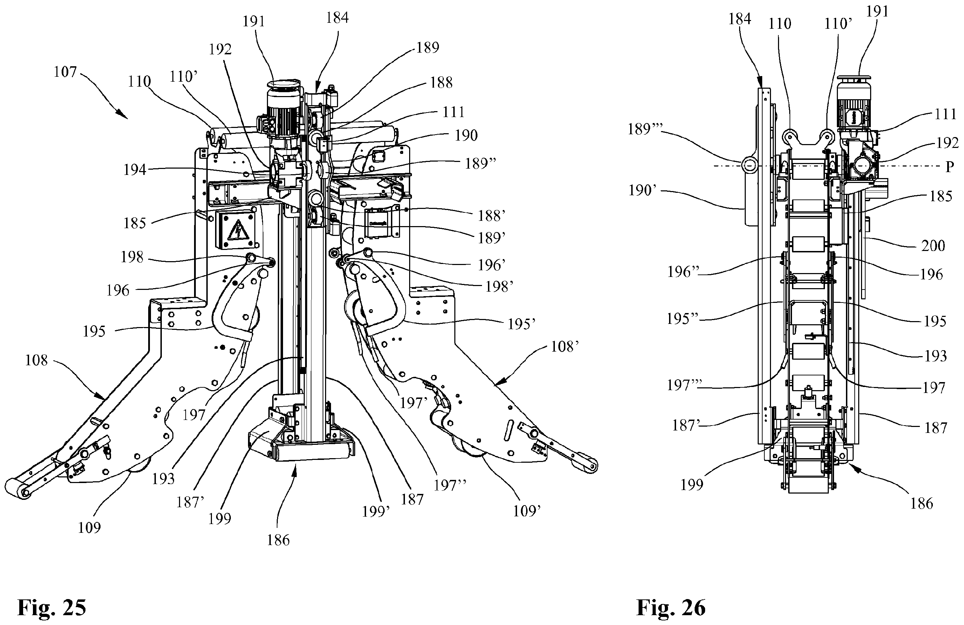

Weiter weist eine in Fig. 25 bis 28 im Detail gezeigte alternative Kabelführungsvorrichtung 107 als Zusatzfunktion zu der in Fig. 2 gezeigten Ausführung eine Pendelschwinge 184 zur besseren Führung des in Fig. 8 bis 20 und 25 bis 28 zeichnerisch nicht dargestellten Leitungskabels 5 auf. Grundsätzlich sind derartige Pendelschwingen bereits bekannt, dem gegenüber neu ist vorliegend aber die Möglichkeit der linearen Bewegbarkeit, insbesondere der linearen Höhenverstellung der Pendelschwinge 184. Dies dient dazu, die während des Verfahrens des Krans 1 ganz in der unteren Stellung befindliche Pendelschwinge 184 zum automatischen Greifen des Verbindungssteckers 106 mittels des Manipulators 118 ganz nach oben und aus dem Greifbereich des Manipulators 118 herauszubewegen und den Verbindungsstecker 106 richtig positionieren zu können.

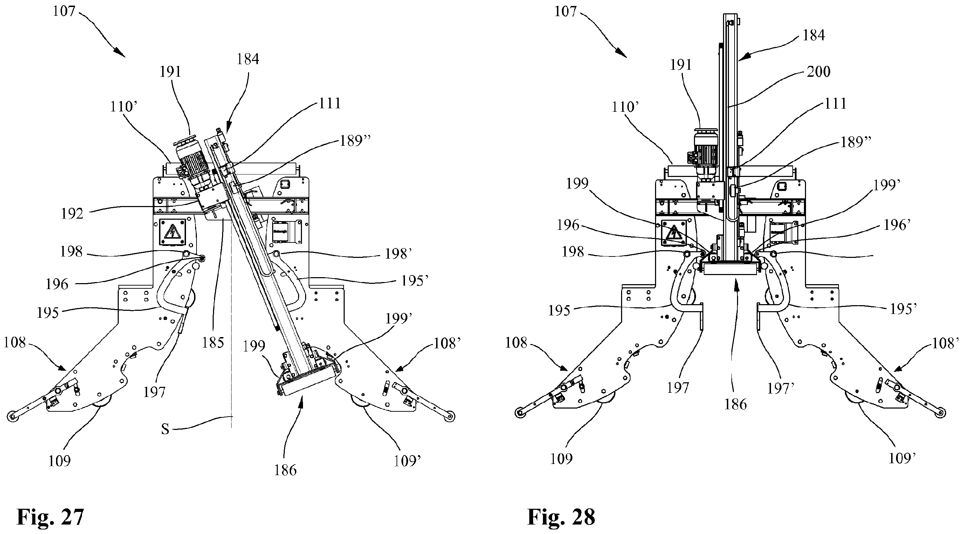

Dabei ist an der Kabelführungsvorrichtung 107 eine um eine im wesentlichen horizontal und quer zur Fahrrichtung F des Krans 1 ausgerichtete Pendelachse P drehbare Pendelhalterung 185 vorgesehen, damit die Pendelschwinge 184 um die Pendelachse P hin und her pendeln kann, wie in Fig. 27 zu erkennen.

Bewirkt wird die Auslenkung der Pendelschwinge 184 aus der Senkrechten S in an sich bekannter Weise durch das während des Verfahrens des Krans 1 auf- bzw. abgewickelte Leitungskabel 5, welches durch eine am unteren Ende der Pendelschwinge 184 angeordnete Kabelführung 186 mit längs und quer ausgerichteten Kabelführungsrollen läuft. Dabei kann über an sich bekannte, nicht näher bezeichnete Stramm- bzw. Schlappsensoren detektiert werden, ob das Leitungskabel 5 gerade stramm oder schlapp geführt ist, und dann ggf. das Leitungskabel 5 eingezogen oder ausgegeben werden. Bevorzugt wird das Leitungskabel 5 durch eine in Ausgaberichtung des Leitungskabels 5 vor der Kabelführung 186 der Pendelschwinge 184 angeordnete weitere Kabelführung geführt, welche vorteilhaft zwischen und/oder am oberen Ende der beiden Rollenbögen 108, 108' angeordnet ist. Die Kabelführung kann vorteilhaft durch die Seitenführungsrollen 110, 110' gebildet werden, es können aber auch andere Möglichkeiten zur Führung des Leitungskabels 5 vorgesehen werden.

Um die Pendelschwinge 184 zwischen den in Fig. 25 und 28 gezeigten oberen und unteren Extremstellungen hin und her bewegen zu können, weist die Pendelschwinge 184 zwei in Fig. 25 zum Teil aufgebrochen dargestellte, im Querschnitt U-förmige, mit ihren offenen Seiten zueinander weisende Führungsschienen 187, 187' auf. Die Führungsschiene 187 wird mittels an der Pendelhalterung 185 angebrachten seitlichen Führungsrollen 188, 188', inneren stirnseitigen Führungsrollen 189, 189' und einer auf der Außenseite des mittleren Schenkels der Führungsschiene 187 laufenden äußeren stirnseitigen Führungsrolle 189" geführt. Die Führungsschiene 187 wird dabei seitlich von einem abgewinkelten Führungsblech 190 mitgeführt, an dem die äußere stirnseitige Führungsrolle 189" angeordnet ist. Die Führung der Führungsschiene 187' ist entsprechend ausgeführt, wobei in Fig. 26 das auf der der Pendelhalterung 185 gegenüberliegenden Seite der Kabelführungsvorrichtung 107 angeordnete Führungsblech 190' der anderen Führungsschiene 187' mit äußerer stirnseitiger Führungsrolle 189"' gut sichtbar ist.

Weiter ist an der Pendelhalterung 185 ein mit der Pendelschwinge 184 beweglicher Pendelantrieb mit einem Elektromotor 191, einem 90°-Getriebe 192 sowie einem auf einer an der Pendelschwinge 184 angebrachten Zahnstange 193 kämmenden Antriebsritzel 194 vorgesehen. Hierdurch kann die Pendelschwinge 184 in ihrer Längsrichtung zur Pendelhalterung 185 motorisch hin und von dieser weg bewegt werden. Alternativ kann auch ein direkter Linearantrieb oder Zahnriemenantrieb für das Ein- und Ausfahren der Pendelschwinge 184 verwendet werden.

Um den Verbindungsstecker 106 für die Greifvorrichtung 127 sauber in der Kabelführungsvorrichtung 107 positionieren zu können, fährt die Pendelschwinge 184 ganz nach oben, wie in Fig. 8 bis 11 und 28 gezeigt. Gleichzeitig oder danach wird der Verbindungsstecker 106 über das Leitungskabel 5 ganz nach oben zur Kabelführung 186 der Pendelschwinge 184 gezogen.

Um den Verbindungsstecker 106 noch besser zum Greifen durch den Manipulator 118 in der Kabelführungsvorrichtung 107 positionieren zu können, sind an den Rollenbögen 108, 108' einander gegenüberliegende Haltebügel 195, 195' angeordnet. Die Haltebügel 195, 195' sind dabei um im wesentlichen horizontale, quer zur Fahrrichtung F verlaufende Drehachsen 196, 196' drehbar und weisen nach unten verlaufende, stabförmige Haltefortsätze 197, 197', 197", 197"' auf, welche in der in Fig. 8 und 28 gezeigten oberen Stellung an dem Verbindungsstecker 106 anliegen und so ein Verdrehen oder Ausweichen des Verbindungsstecker 106 während des Greifens durch die Greifvorrichtung 127 verhindern.

Standardmäßig werden die Haltebügel 195, 195' federbewirkt in der in Fig. 12, 25 und 27 gezeigten offenen Rückzugsstellung an den Rollenbögen 108, 108' gehalten.

Erst wenn die Pendelschwinge 184 in die in Fig. 8 bis 11 und 28 gezeigte obere Haltestellung verfahren wird, schlagen Anschlagsrollen 198, 198' an den oberen, kürzeren Hebelarmen der Haltebügel 195, 195' an entsprechenden Anschlägen 199, 199' der Kabelführung 186 an, sodass die unteren, längeren, in etwa L-förmig nach innen gebogenen Hebelarme der Haltebügel 195, 195' aufeinander zu und zum Verbindungsstecker 106 hin bewegt werden. Die Haltebügel 195, 195' können auch anders ausgestaltet werden, wesentlich ist lediglich, dass beim Hochfahren der Pendelschwinge 184 oder gegebenenfalls auch des Verbindungssteckers 106 selbst die Haltebügel 195, 195' zur Anlage an den Verbindungsstecker 106 bewegt werden.

Wie in Fig. 27 erkennbar, dienen die Kabelführungsanschläge 199, 199' dabei zusätzlich auch als Betätigungselemente für die nicht näher bezeichneten Strammsensoren, wenn die Pendelschwinge 184 in ihre seitlich ganz ausgelenkte Stellung gezogen wird.

Vorliegend ist der oben beschriebene Sensor 111 vorteilhaft an der Pendelschwinge 184 angeordnet, wobei er über eine Energiekette 200 mit Strom versorgt wird und Datentechnisch mit der Steuerung des Krans verbunden ist. Der Sensor 111 könnte aber auch an einer Stelle der Kabelführungsvorrichtung 107 oder auch am Kran 1 angeordnet sein, und könnte auch kabellos mit der Steuerung verbunden sein.

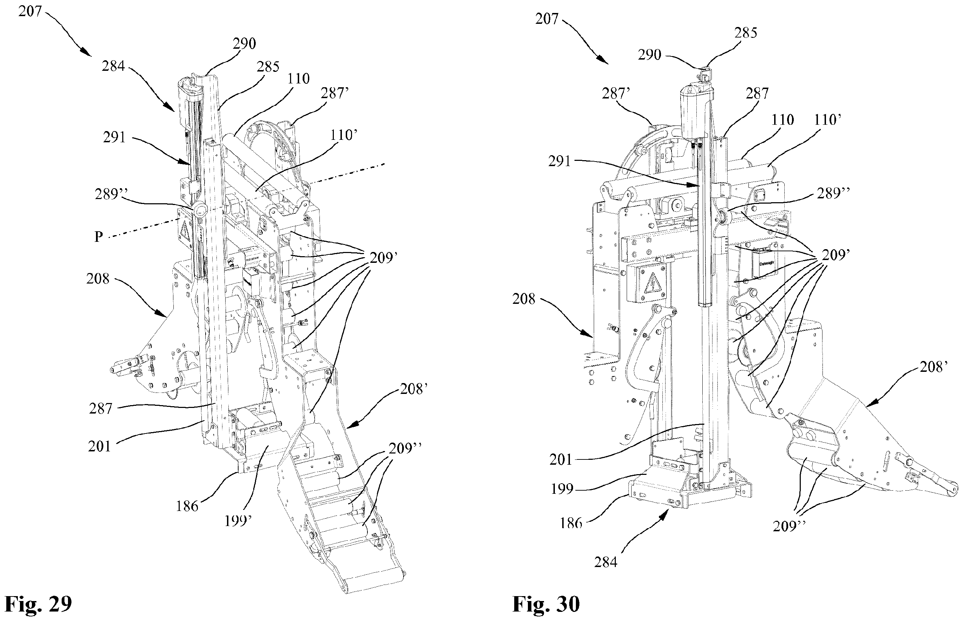

Figuren 29 und 30 zeigen eine alternative Ausgestaltung einer Kabelführungsvorrichtung 207, welche sich im wesentlichen durch zwei Dinge von der in Fig. 25 bis 28 gezeigten Ausführung unterscheidet, nämlich einerseits die Ausgestaltung von Rollenbögen 208, 208' und Längsführungsrollen 209, 209' bzw. 209" sowie andererseits eines alternativen Antriebs 291 einer Pendelschwinge 284. Deshalb werden bei der Kabelführungsvorrichtung 207 wieder entsprechende Bezugsziffern, jeweils ergänzt um die Ziffer "200" verwendet. Auch wird vor allem auf die Unterschiede eingegangen, so dass Ausführungen zu entsprechenden Teilen bei der ersten Ausführung nach Fig. 2 bis 7 sowie der zweiten Ausführung nach Fig. 8 bis 28 entsprechend auch bei der in Fig. 29 und 30 gezeigten Ausführung gelten, soweit nicht anders angegeben.

Dabei sind äußere Längsführungsrollen 209" im äußeren, unteren Bereich des Rollenbogens 208' breiter als die im Inneren, oberen Bereich des Rollenbogens 108' angeordneten inneren Längsführungsrollen 209' des Rollenbogens 208'. Dies hat den Vorteil, dass bei Ausgabe des Leitungskabels 5 nicht ganz parallel zur Fahrrichtung F des Krans 1 das Leitungskabel 5 im Außenbereich des Rollenbogens 208 etwas mehr seitlichen Versatz aufweisen kann, also eine von oben auf die Kabelführungsvorrichtung 207 gesehen leicht schräge Ausrichtung des Leitungskabels 5 zu der Längserstreckung des Rollenbogens 208' aufweisen kann. Hierzu weist der Rahmen des Rollenbogens 208' an seinem äußeren, unteren, nach außen weisenden Ende bevorzugt einen größeren Abstand zweier gegenüberliegender Wandungen, zwischen denen die Längsführungsrollen 209" befestigt sind, auf, als im Bereich der inneren, schmäleren Längsführungsrollen 209'. Der zweite, andere Rollenbogen 208 ist entsprechend seitenverkehrt ausgebildet, ansonsten gelten die Ausführungen zum Rollenbogen 208' entsprechend.

Weiter wird anstelle des in Figuren 25 bis 28 gezeigten rotatorischen Elektromotors 191 ein direkter Linearantrieb 291 zum longitudinalen Bewegen der Pendelschwinge 284 verwendet. Dabei ist die Pendelhalterung 285 etwas nach oben verlängert, wie auch das abgewinkelte Führungsblech 290. Bevorzugt kann sich der Antriebsteil des Linearantrieb 291 an dem abgewinkelte Führungsblech 290 bzw. der Pendelhalterung 285 abstützen, während eine bewegbare Kolbenstange 201 des Linearantriebs 291 an dem beweglichen Teil der Pendelschwinge 284 befestigt ist. Bevorzugt kann das abtriebsseitige Ende der Kolbenstange 201 am in Fig. 29 und 30 unteren Ende des beweglichen Teils der Pendelschwinge 284, insbesondere einer U-förmigen Führungsschienen 287 angebracht sein. Zum Hochfahren der Pendelschwinge 284 wird dann die Kolbenstange 201 nach oben bewegt.

Wie oben ausführlich beschrieben, kann mittels der erfindungsgemäßen Verbindungsvorrichtung 13, 113 eine einfache, automatische Verbindung des Verbindungssteckers 6, 106 des Leitungskabels 5 mit der Einspeiseeinrichtung 12, 112 ermöglich werden, ohne dass der Verbindungsstecker 6, 106 hierzu händisch ein- oder ausgesteckt werden muss. Hierzu kann nach einem weiteren Aspekt der Erfindung das Leitungskabel 5 zum besseren automatischen Verbinden einen speziellen Aufbau aufweisen. Weiter kann vorteilhaft auch der Verbindungsstecker 6, 106 speziell ausgebildet sein, um das Greifen mit dem Manipulator 18, 118 und insbesondere der Greifvorrichtung 27, 127 zu verbessern. Ebenfalls zum vereinfachten automatischen Greifen des Leitungskabels 5 bzw. des Verbindungssteckers 106 kann eine höhenverstellbare Pendelschwinge 284 vorgesehen werden. Ein weiterer Aspekt der Erfindung ermöglicht eine kabelschonende Führung des Leitungskabels 5.

Die Zustellrichtung H verläuft bevorzugt auf die Kabelführungsvorrichtung 7, 107 bzw. 207 und den Kran 1 hin bzw. von diesen weg und bevorzugt quer zur Fahrrichtung F. In einer nicht gezeigten Ausführung kann der Manipulator 18 bzw. 118 und/oder die Greifvorrichtung 27 bzw. 127 aber zusätzlich auch in Fahrrichtung F bewegbar sein, um ggf. einen Versatz in Fahrrichtung F ausgleichen zu können. Ebenso kann der Manipulator 18 bzw. 118 und/oder die Greifvorrichtung 27 bzw. 127 auch um eine vertikale Achse drehbar sein, um vorteilhaft einen Winkelversatz z.B. bei schräg stehender Kabelführungsvorrichtung 7, 107 bzw. 207 besser ausgleichen zu können.

### Bezugszeichenliste

- 1: Containerkran (E-RTG)
- 2: Container
- 3, 3': Räder
- 4: Kabeltrommel
- 5: Leitungskabel
- 6; 106: Verbindungsstecker
- 7; 107; 207: Kabelführungsvorrichtung
- 8, 8'; 108, 108'; 208, 208': Rollenbogen
- 9, 9'; 109, 109'; 209, 209', 209": Längsführungsrollen
- 10, 10', 110, 110': Seitenführungsrollen
- 11; 111: Sensoreinheit
- 12; 112: Einspeiseeinrichtung
- 13; 113: Verbindungsvorrichtung
- 14, 14'; 14", 114, 114', 114": Steckanschlüsse
- 15, 15'; 115, 115', 115": Anschlussteil (Schwenkplatte)
- 16, 16'; 116: Lagerung für Anschlussteil
- 17; 117: Befestigungsplatte
- 18; 118: Manipulator
- 19: Manipulatorbasis
- 20: unterer Manipulatorarm
- 21, 21', 21": untere Teilarme
- 22: unterer Manipulatorantrieb
- 23: kreuzförmiges Verbindungsstück
- 24: oberer Manipulatorarm
- 25, 25': obere Teilarme
- 26: oberer Manipulatorantrieb
- 27; 127: Greifvorrichtung
- 28; 128: trichterförmige Einführöffnung
- 29; 129: Signalmast
- 30; 130: Identifikatorplatte
- 31: Signalleuchte
- 32; 132: Verbindungssteckeröffnung
- 33, 33': Anschlussgehäuse
- 34, 34': Abdeckung
- 35, 35': Scharniere für Abdeckung
- 36, 36': Betätigungslaschen für Abdeckung
- 37, 37': Anschlag für Schwenkplatte
- 38, 138: Greifteil Verbindungsstecker
- 39, 139: Zentriertrichter
- 40, 140: Zentrierdorne
- 41: Außenmantel
- 42: Phasenleiter
- 43: Schutzleiter
- 44: Datenübertragungsleiter
- 45: Tragorgan
- 46: Füllmaterial, Formteile
- 47: Zugentlastung
- 148: Schaltschrank
- 149: Energieversorgungs- und Datenkabel
- 150, 150', 150": Kabeldurchführungen
- 151: Standfüße
- 152: Gabelbaum
- 153: Zentralbereich Identifikatorplatte
- 154, 154': Randbereiche Identifikatorplatte
- 155: Fundament
- 156: Grube
- 157, 157', 157": erste, bewegliche Schutzumhausungen
- 158, 158', 158", 158''': Seitenwandungen, Stirnwandung, Öffnung 1. Schutzumhausung
- 159, 159', 159": zweite, feste Schutzumhausungen
- 160, 160', 160", 160''': Seitenwandungen, Stirnwandung, Öffnung 2. Schutzumhausung
- 161, 161': Zentrierbügel
- 162, 162': vertikale Führungsbereich Zentrierbügel
- 163, 163': schräger Einführungsbereich Zentrierbügel
- 164, 164', 164": Steckerverriegelung
- 165, 165', 165": Verriegelungsbolzen
- 165a, 165a', 165a": Verriegelungsbolzen
- 166, 166', 166": länglicher Verriegelungskopf
- 167, 167', 167": Verriegelungsantrieb
- 168, 168', 168": Hebelanordnung
- 169, 169': längliche Verriegelungsöffnungen
- 170: Steckerverkleidungshälfte
- 171: U-förmiger Stützrahmen
- 172, 172': Schenkelenden
- 173: Stützrahmen-Mittelteil
- 174: kreisförmige Öffnung Stützrahmen
- 175: Außenflansch Greifteil
- 176: Spannbolzen
- 177: Spiralfeder
- 178: abgestuftes Ende des Spannbolzen
- 179: Rutschsicherung
- 180: männliche Anschlusselemente Verbindungsstecker
- 181: Anschlussträger
- 182: Schutzklappe
- 183: längliche Zentrierbolzen
- 184; 284: Pendelschwinge
- 185; 285: Pendelhalterung
- 186: Kabelführung
- 187, 187'; 287, 287': U-förmige Führungsschienen
- 188, 188': seitliche Führungsrollen
- 189, 189', 189", 189"; 289": frontale innen- und außenseitige Führungsrollen
- 190, 190'; 290: abgewinkeltes Führungsblech
- 191; 291: Elektromotor (rotatorisch), Linearantrieb
- 192: 90°-Getriebe
- 193: Zahnstange
- 194: Antriebsritzel
- 195, 195': Haltebügel
- 196, 196': Haltebügel-Drehachsen
- 197, 197': Haltefortsätze
- 198, 198': Anschlagsrollen
- 199, 199': Kabelführungsanschläge
- 200: Energiekette
- 201: Kolbenstange Linearantrieb
- D: horizontale Drehachse Anschlussteil
- F: Fahrrichtung Kran
- H: horizontale Zustellrichtung Manipulator
- P: Pendelachse Pendelschwinge
- S: Senkrechte der Pendelschwinge
- V: vertikale Zustellrichtung Manipulator

## Patentansprüche

1. Leitungskabel (5) mit einem oder mehreren Leitern (41-44) zur Übertragung elektrischer Energie und/oder Daten und einem länglichen Tragorgan (45), wobei an einem Ende des Leitungskabels (5) ein Verbindungselement (6; 106) zur Verbindung mit einem Anschluss (14, 14', 14"; 114, 114', 114") einer Einspeiseeinrichtung (12; 112) für elektrische Energie und/oder Daten angeordnet ist, wobei das Tragorgan (45) zur Übertragung von Längszugkräften kraft- und/oder formschlüssig mit dem Verbindungselement (6; 106) verbindbar ist, **dadurch gekennzeichnet, dass** das Tragorgan (45) an einem Spannbolzen (176) befestigt ist, der zum Spannen des Tragorgans (45) bevorzugt um eine quer zur Längsrichtung des Tragorgans (45) verlaufende Drehachse drehbar am Verbindungselement (6; 106) befestigt ist.

2. Leitungskabel (5) nach Anspruch 1, **dadurch gekennzeichnet, dass** das Verbindungselement (6; 106) einen Stützrahmen (171) aufweist, der kraft- und/oder formschlüssig mit dem Tragorgan (45) verbindbar ist.

3. Leitungskabel (5) nach Anspruch 1 oder 2, **dadurch gekennzeichnet, dass** das Verbindungselement (6; 106) eine Rutschsicherung (179) zur Sicherung des Spannbolzens (176) aufweist.

4. Leitungskabel (5) nach Anspruch 3, **dadurch gekennzeichnet, dass** der Spannbolzen (176) zum Spannen des Tragorgans (45) in seiner Achsrichtung gegen ein Rückstellelement (177) aus der Rutschsicherung (179) herausbewegbar ist.

5. Leitungskabel (5) nach einem der voranstehenden Ansprüche, **dadurch gekennzeichnet, dass** die Leiter (41-44) des Leitungskabels (5) zugentlastet oder zugfrei mit im Verbindungselement (6; 106) angeordneten Anschlusselementen (180) verbunden sind.

6. Leitungskabel (5) nach Anspruch 5, **dadurch gekennzeichnet, dass** die Anschlusselemente (180) in mindestens eine Richtung schwimmend im Verbindungselement (6; 106) gelagert sind.

7. Leitungskabel (5) nach einem der voranstehenden Ansprüche, **dadurch gekennzeichnet, dass** das Verbindungselement (6; 106) eine Verbindungssteckeröffnung (32; 132) zur Aufnahme des Anschlusses (14, 14', 14"; 114, 114', 114") aufweist.

8. Leitungskabel (5) nach Anspruch 7, **dadurch gekennzeichnet, dass** am Verbindungselement (6; 106) eine selbsttätig schließende Schutzklappe (136) zum Verschließen der Verbindungssteckeröffnung (32; 132) vorgesehen ist.

9. Leitungskabel (5) nach einem der voranstehenden Ansprüche, **dadurch gekennzeichnet, dass** am Verbindungselement (6; 106) Zentrierelemente (183, 183'), insbesondere Zentrierbolzen zum Zusammenwirken mit entsprechenden Zentriergegenelementen, insbesondere Zentrieröffnungen, des Anschlusses (14, 14', 14"; 114, 114', 114") vorgesehen sind.

10. Leitungskabel (5) nach einem der voranstehenden Ansprüche, **dadurch gekennzeichnet, dass** am Verbindungselement (6; 106) ein Greifbereich (38; 138) für eine Greifvorrichtung (27; 127) vorgesehen ist.

11. Leitungskabel (5) nach Anspruch 10, **dadurch gekennzeichnet, dass** der Greifbereich (38; 138) mindestens einen Zentriertrichter (39; 139) für mindestens ein Zentriermittel (40; 140) der Greifvorrichtung (27; 127) oder umgekehrt aufweist.

12. Leitungskabel (5) nach Anspruch 11, **dadurch gekennzeichnet, dass** der Zentriertrichter (139) an seinem engeren Ende schlitzförmig in einen Zentrierschlitz verlängert ist.

13. Energieversorgungssystem zur kabelgebundenen Versorgung eines verfahrbaren elektrischen Verbrauchers (1) mit elektrischer Energie und/oder Daten, mit mindestens einer Einspeiseeinrichtung (12; 112) und einem damit verbindbaren Verbindungselement (6; 106) eines Leitungskabels (5) des Verbrauchers (1), wobei das Leitungskabel (5) aus einem vom Verbraucher (1) mitgeführten Reservoir (4) entsprechend eines Abstands zwischen Reservoir (4) und Einspeiseeinrichtung (12; 112) ausgebbar bzw. einholbar ist, **dadurch gekennzeichnet, dass** das Leitungskabel (5) nach einem der voranstehenden Ansprüche ausgebildet ist.

14. Energieversorgungssystem nach Anspruch 13, **dadurch gekennzeichnet, dass** eine Steckerverriegelung (164, 164', 164'', 164a, 164a', 164a ") zum Verriegeln des Verbindungselements (6; 106) am Anschluss (14, 14 ', 14 ", 114, 114', 114") vorgesehen ist.

15. Energieversorgungssystem nach einem der Ansprüche 13 bis 14, **dadurch gekennzeichnet, dass** eine Verbindungsvorrichtung (13; 113) zur Verbindung eines Verbindungselements (6; 106) des Leitungskabels (5) mit einem Anschluss (14, 14', 14", 114, 114', 114") der Einspeiseeinrichtung (12; 112) vorgesehen ist.

## Claims

1. Cable (5) having one or more conductors (41-44) for transmitting electrical energy and/or data and an elongated supporting member (45), wherein a connecting element (6; 106) for connection to a terminal (14, 14', 14"; 114, 114', 114") of a feed device (12; 112) for electrical energy and/or data is arranged at one end of the cable (5), wherein the supporting member (45) is connectable in non-positive and/or positive manner to the connecting element (6; 106) for transmitting longitudinal tensile forces, **characterised in that** the supporting member (45) is attached to a clamping bolt (176) which is attached to the connecting element (6; 106) to be rotatable preferably about a rotational axis running transversely to the longitudinal direction of the supporting member (45) for clamping the supporting member (45).

2. Cable (5) according to claim 1, **characterised in that** the connecting element (6; 106) has a supporting frame (171) which is connectable non-positively and/or positively to the supporting member (45).

3. Cable (5) according to claim 1 or 2, **characterised in that** the connecting element (6; 106) has an anti-slipping device (179) for securing the clamping bolt (176).

4. Cable (5) according to claim 3, **characterised in that** the clamping bolt (176) for clamping the supporting member (45) in its axial direction against a restoring element (177) is movable out of the anti-slipping device (179).

5. Cable (5) according to one of the preceding claims, **characterised in that** the conductors (41-44) of the cable (5) are connected to terminal elements (180) arranged in the connecting element (6; 106) in strain-relieved or tension-free manner.

6. Cable (5) according to claim 5, **characterised in that** the terminal elements (180) are mounted in at least one direction to be floating in the connecting element (6; 106).

7. Cable (5) according to one of the preceding claims, **characterised in that** the connecting element (6; 106) has a connection plug opening (32; 132) for receiving the terminal (14, 14', 14"; 114, 114', 114").

8. Cable (5) according to claim 7, **characterised in that** an automatically closing protective cap (136) for sealing the connection plug opening (32; 132) is provided on the connecting element (6; 106).

9. Cable (5) according to one of the preceding claims, **characterised in that** centring elements (183, 183'), in particular centring bolts for cooperation with corresponding centring counter-elements, in particular centring openings, of the terminal (14, 14', 14"; 114, 114', 114") are provided on the connecting element (6; 106).

10. Cable (5) according to one of the preceding claims, **characterised in that** a gripping region (38; 138) for a gripping device (27; 127) is provided on the connecting element (6; 106).

11. Cable (5) according to claim 10, **characterised in that** the gripping region (38; 138) has at least one centring funnel (39; 139) for at least one centring means (40; 140) of the gripping device (27; 127) or vice versa.

12. Cable (5) according to claim 11, **characterised in that** the centring funnel (139) is extended into a centring slot like a slot at its narrower end.

13. Energy supply system for cable-bound supply of a movable electric consuming device (1) with electrical energy and/or data, having at least one feed device (12; 112) and a connecting element (6; 106), which is connectable thereto, of a cable (5) of the consuming device (1), wherein the cable (5) can be issued or retrieved from a reservoir (4) carried by the consuming device (1) according to a distance between reservoir (4) and feed device (12; 112), **characterised in that** the cable (5) is designed according to one of the preceding claims.

14. Energy supply system according to claim 13, **characterised in that** a plug lock (164, 164', 164", 164a, 164a', 164a ") for locking the connecting element (6; 106) is provided on the terminal (14, 14', 14", 114, 114', 114").

15. Energy supply system according to one of claims 13 to 14, **characterised in that** a connecting device (13; 113) is provided for connecting a connecting element (6; 106) of the cable (5) to a terminal (14, 14', 14", 114, 114', 114") of the feed device (12; 112).

## Revendications

1. Câble d'alimentation (5) avec un ou plusieurs conducteurs (41-44) servant à transmettre une énergie électrique et/ou des données et un organe porteur (45) allongé, dans lequel un élément de liaison (6 ; 106) destiné à être relié à un raccord (14, 14', 14" ; 114, 114', 114") d'un système d'injection (12 ; 112) pour une énergie électrique et/ou des données est disposé au niveau d'une extrémité du câble d'alimentation (5), dans lequel l'organe porteur (45) peut être relié à force et/ou par complémentarité de forme à l'élément de liaison (6 ; 106) aux fins de la transmission de forces de traction longitudinale, **caractérisé en ce que** l'organe porteur (45) est fixé au niveau d'un boulon de serrage (176), qui est fixé au niveau de l'élément de liaison (6 ; 106) de manière à pouvoir tourner de manière préférée autour d'un axe de rotation s'étendant de manière transversale par rapport à la direction longitudinale de l'organe porteur (45) aux fins du serrage de l'organe porteur (45).

2. Câble d'alimentation (5) selon la revendication 1, **caractérisé en ce que** l'élément de liaison (6 ; 106) présente un cadre d'appui (171), qui peut être relié à force et/ou par complémentarité de forme à l'organe porteur (45).

3. Câble d'alimentation (5) selon la revendication 1 ou 2, **caractérisé en ce que** l'élément de liaison (6 ; 106) présente un système de blocage antidérapant (179) servant à bloquer le boulon de serrage (176) .

4. Câble d'alimentation (5) selon la revendication 3, **caractérisé en ce que** le boulon de serrage (176) peut être déplacé hors du système de blocage antidérapant (179) à l'encontre d'un élément de rappel (177) aux fins du serrage de l'organe porteur (45) dans sa direction axiale.

5. Câble d'alimentation (5) selon l'une quelconque des revendications précédentes, **caractérisé en ce que** les conducteurs (41-44) du câble d'alimentation (5) sont reliés de manière libérée de toute traction ou sans traction à des éléments de raccordement (180) disposés dans l'élément de liaison (6 ; 106).

6. Câble d'alimentation (5) selon la revendication 5, **caractérisé en ce que** les éléments de raccordement (180) sont montés dans au moins une direction de manière flottante dans l'élément de liaison (6 ; 106).

7. Câble d'alimentation (5) selon l'une quelconque des revendications précédentes, **caractérisé en ce que** l'élément de liaison (6 ; 106) présente une ouverture d'enfichage de liaison (32 ; 132) servant à recevoir le raccord (14, 14', 14" ; 114, 114', 114").

8. Câble d'alimentation (5) selon la revendication 7, **caractérisé en ce qu'**un clapet de protection (136) à fermeture autonome servant à fermer l'ouverture d'enfichage de liaison (32 ; 132) est prévu au niveau de l'élément de liaison (6 ; 106).

9. Câble d'alimentation (5) selon l'une quelconque des revendications précédentes, **caractérisé en ce que** des éléments de centrage (183, 183'), en particulier des boulons de centrage servant à coopérer avec des contre-éléments de centrage correspondants, en particulier des ouvertures de centrage, du raccord (14, 14', 14" ; 114, 114', 114") sont prévus au niveau de l'élément de liaison (6 ; 106).

10. Câble d'alimentation (5) selon l'une quelconque des revendications précédentes, **caractérisé en ce qu'**une zone de préhension (38 ; 138) pour un dispositif de préhension (27 ; 127) est prévue au niveau de l'élément de liaison (6 ; 106).

11. Câble d'alimentation (5) selon la revendication 10, **caractérisé en ce que** la zone de préhension (38 ; 138) présente au moins une trémie de centrage (39 ; 139) pour au moins un moyen de centrage (40 ; 140) du dispositif de préhension (27 ; 127), ou inversement.

12. Câble d'alimentation (5) selon la revendication 11, **caractérisé en ce que** la trémie de centrage (139) est prolongée au niveau de son extrémité plus étroite en une entaille de centrage, de manière à présenter une forme d'entaille.

13. Système d'alimentation en énergie servant à alimenter de manière filaire un consommateur (1) électrique déplaçable en énergie électrique et/ou en données, avec au moins un dispositif d'injection (12 ; 112) et un élément de liaison (6 ; 106), pouvant y être relié, d'un câble d'alimentation (5) du consommateur (1), dans lequel le câble d'alimentation (5) peut être sorti ou rentré depuis un réservoir (4) guidé par le consommateur (1) selon une distance entre le réservoir (4) et le dispositif d'injection (12 ; 112), **caractérisé en ce que** le câble d'alimentation (5) est réalisé selon l'une quelconque des revendications précédentes.

14. Système d'alimentation en énergie selon la revendication 13, **caractérisé en ce qu'**est prévu un verrouillage par enfichage (164, 164', 164'', 164a, 164a', 164a '') servant à verrouiller l'élément de liaison (6 ; 106) au niveau du raccord (14, 14', 14", 114, 114', 114")

15. Système d'alimentation en énergie selon l'une quelconque des revendications 13 et 14, **caractérisé en ce qu'**est prévu un dispositif de liaison (13 ; 113) servant à relier un élément de liaison (6 ; 106) du câble d'alimentation (5) à un raccord (14, 14 ', 14 ", 114, 114', 114") du système d'injection (12 ; 112).
